# EUROPEAN PATENT APPLICATION

(11) **EP 4 737 398 A2**
(43) Date of publication of application: **06.05.2026**
(21) Application number: 25200055.9
(22) Date of filing: 01.06.2022
(51) Int. Cl.: C01G 53/50

(54) **MODIFIED HIGH-NICKEL TERNARY POSITIVE ELECTRODE MATERIAL AND PREPARATION METHOD THEREFOR, AND POWER-CONSUMING APPARATUS**

(30) Priority: 18.09.2021 CN 202111102848
(62) Divisional of application: 22868734.9
(71) Applicant: Contemporary Amperex Technology (Hong Kong) Limited, Central, Central And Western District (HK)
(72) Inventor: WU, Qi, Ningde, 352100 (CN); CHEN, Qiang, Ningde, 352100 (CN); ZHAO, Yuxiang, Ningde, 352100 (CN); FAN, Jingpeng, Ningde, 352100 (CN); HUANG, Qisen, Ningde, 352100 (CN)
(74) Representative: Jacob, Reuben Ellis

(57) **Abstract**

Provided in the present application is a modified high-nickel ternary positive electrode material, containing a core, an inner coating layer and an outer coating layer. The core contains a high-nickel ternary positive electrode material matrix, which is doped with M1, M2 and W, wherein M1 is one of Mo, Zr, Ti, Sb, Nb and Te; and M2 is one of Mg, Al, Ca, Zn and Sr. The chemical formula of the high-nickel ternary positive electrode material matrix doped with M1, M2 and W is Li₁₊ₐ[NiₓCo_{y}Mn_{z}M1_{b}M2_{c}W_{d}]O₂, wherein 0.65 ≤ x < 1; 0 ≤ y < 0.3; 0 ≤ z < 0.3; 0 < a < 0.2; 0< b < 0.1; 0 < c < 0.1; 0 < d < 0.1; x + y + z + b + c + d = 1; and optionally, 0.8 ≤ x < 1. The surface layer of the core is further doped with Co. The inner coating layer is a Co-containing compound, and the outer coating layer is an Al-containing compound and a B-containing compound. The present application also relates to a method for preparing a modified high-nickel ternary positive electrode material, and a secondary battery, a battery module, a battery pack and a power-consuming apparatus.

## Description

### TECHNICAL FIELD

This application relates to the field of lithium battery technologies, and in particular, to a modified high-nickel ternary positive electrode material and a preparation method therefor, a secondary battery, a battery module, a battery pack, and an electric apparatus.

### BACKGROUND

With the rapid development of the new energy field, lithium-ion secondary batteries, by virtue of their excellent electrochemical performance, zero memory effect, and little environmental pollution, are widely used in all kinds of large power apparatuses, energy storage systems, and consumer products, especially the field of new energy vehicles such as battery electric vehicles and hybrid electric vehicles.

Due to great development of the lithium-ion secondary batteries, higher requirements are imposed on energy density, cycling performance, safety performance, and the like of the lithium-ion secondary batteries, while high-nickel positive electrode active materials are considered as the optimal choice to meet the requirements for high energy density. However, with continuously increasing of nickel content, structural stability of the high-nickel positive electrode active materials become worse, thus affecting the cycling performance and storage performance of the lithium-ion secondary batteries.

Therefore, there is a need to increase the capacity of the lithium-ion secondary batteries while ensuring the cycling performance and storage performance of the secondary batteries.

### SUMMARY

In view of the technical problem in the background, this application provides a modified high-nickel ternary positive electrode material, so that a lithium-ion battery prepared using the material has improved cycling performance and storage performance while having a high capacity.

To achieve the foregoing objective, a first aspect of this application provides a modified high-nickel ternary positive electrode material, including an inner core, an inner coating layer, and an outer coating layer, where the inner core includes a high-nickel ternary positive electrode material matrix, the matrix being doped with M1, M2, and W, where M1 is one of Mo, Zr, Ti, Sb, Nb, and Te, M2 is one of Mg, Al, Ca, Zn, and Sr, and a chemical formula of the high-nickel ternary positive electrode material matrix doped with M1, M2, and W is Li₁₊ₐ[NiₓCo_{y}Mn_{z}M1_{b}M2_{c}W_{d}]O₂, where 0.65 ≤ x < 1, 0 ≤ y < 0.3, 0 ≤ z < 0.3, 0 < a < 0.2, 0 < b < 0.1, 0 < c < 0.1, 0 < d < 0.1, x + y + z + b + c + d = 1, and optionally, 0.8 ≤ x < 1; a surface layer of the inner core is also doped with Co; the inner coating layer is a Co-containing compound; and the outer coating layer includes an Al-containing compound and a B-containing compound.

Compared with the prior art, this application includes at least the following beneficial effects:

In this application, the high-nickel ternary positive electrode material matrix is doped with three kinds of ions (namely M1, M2, and W) synergistically, so that structural stability of the high-nickel ternary positive electrode material can be more effectively increased, thereby significantly improving cycling performance and thermal stability of the secondary battery. In this application, the surface layer of the high-nickel ternary positive electrode material is also doped with Co, so that an amount of high-valent nickel ions contained in the surface layer of the high-nickel ternary positive electrode material can be effectively reduced, thereby reducing side reactions between the high-valent nickel ions and the electrolyte and further improving the cycling performance and storage performance of the secondary battery. In addition, in this application, the high-nickel ternary positive electrode material is uniformly coated with an inner layer containing a Co compound and an outer layer containing an Al compound and a B-containing compound, so that an amount of lithium impurities contained on the surface can be effectively reduced and interface side reactions between the high-nickel ternary positive electrode material and the electrolyte can be further effectively inhibited, thereby improving the capacity and rate performance of the high-nickel ternary positive electrode material and further improving the cycling, storage, and safety performance of the secondary battery.

In any embodiment, a doping amount of M1 is ≥ a doping amount of M2 or W.

In any embodiment, a ratio of the doping amount of M1 to a sum of the doping amounts of M2 and W is 1:(0.1-2), optionally 1:(0.5-1.5).

The ratio of the doping amount of M1 to the sum of the doping amounts of M2 and W being controlled within the given range can ensure that the high-nickel ternary positive electrode material has a relatively high capacity and can improve structural stability of the material to the greatest extent, thereby further improving the cycling performance of the secondary battery.

In any embodiment, a thickness d of the surface layer satisfies 0 < d < 3 µm, optionally 0 < d < 2 µm. When the thickness d of the surface layer is within the given range, the cycling performance of the secondary battery can be further improved.

In any embodiment, a sum of a doping amount of Co in the surface layer and a coating amount of the Co-containing compound is 100-20000 ppm, optionally 1000-13000 ppm; a coating amount of the Al-containing compound is 100-3000 ppm, optionally 500-2000 ppm; and a coating amount of the B-containing compound is 100-2000 ppm, optionally 500-1500 ppm, where each of the doping amount in the surface layer and the coating amounts is calculated based on a corresponding element in a compound with respect to the modified high-nickel ternary positive electrode material. When the sum of the doping amount of Co in the surface layer and the coating amount of the Co-containing compound is within the given range, the cycling performance of the secondary battery can be further improved. When the coating amount of the Al-containing compound and the coating amount of the B-containing compound are within the given ranges, the cycling performance of the secondary battery can be further improved.

In any embodiment, a total thickness of the inner and outer coating layers is 0.001-1 µm.

In any embodiment, the coating amount of the Al-containing compound and the coating amount of the B-containing compound satisfy that a weight ratio of Al to B is (0.5-2):1, where each of the coating amounts is calculated based on a corresponding element in a compound with respect to the modified high-nickel ternary positive electrode material. When the coating amount of the Al-containing compound and the coating amount of the B-containing compound satisfy the given relationship, the capacity and cycling performance of the secondary battery can be further improved.

In any embodiment, a doping amount of W is 100-2000 ppm, optionally 100-1500 ppm; the doping amount of M1 is 2000-4000 ppm; and the doping amount of M2 is 500-2000 ppm, where each of the doping amounts is calculated based on a corresponding element with respect to the modified high-nickel ternary positive electrode material. When the doping amounts of M1, M2, and W are within the given ranges, the structural stability of the high-nickel ternary positive electrode material can be further improved, thereby further improving the cycling performance and storage performance of the secondary battery.

In any embodiment, a sum of the doping amount of Co in the surface layer and coating amounts of the Co-containing compound, the Al-containing compound, and the B-containing compound is 1000-22000 ppm, optionally 1000-15000 ppm, where each of the doping amount in the surface layer and the coating amounts is calculated based on a corresponding element in a compound with respect to the modified high-nickel ternary positive electrode material.

In any embodiment, a volume particle size distribution span of the modified high-nickel ternary positive electrode material satisfies (Dᵥ90 - Dᵥ10)/Dᵥ50 ≥ 1.1, optionally (Dᵥ90 - Dᵥ10)/Dᵥ50 ≥ 1.2.

In any embodiment, a powder compacted density of the modified high-nickel ternary positive electrode material under a pressure of 5 tons is ≥ 3.4 g/cc, optionally ≥ 3.5 g/cc.

The inventors have found through experiments that: When the modified high-nickel ternary positive electrode material has a relatively wide volume particle size distribution span and a relatively high powder compacted density, the volumetric energy density of the high-nickel ternary positive electrode material can be significantly increased.

A second aspect of this application further provides a method for preparing a modified high-nickel ternary positive electrode material, including:
step S1: mixing and sintering a lithium salt, a high-nickel ternary precursor doped with W, an M1-containing compound, and an M2-containing compound, to obtain a high-nickel ternary positive electrode material matrix doped with M1, M2, and W, where a chemical formula of the high-nickel ternary precursor doped with W is (Ni_{X}Co_{Y}Mn_{Z}W_{D})(OH)₂, where 0.65 ≤ X < 1, 0 ≤ Y < 0.3, 0 ≤ Z < 0.3, 0 < D < 0.1, M1 is one of Mo, Zr, Ti, Sb, Nb, and Te, M2 is one of Mg, Al, Ca, Zn, and Sr, and a chemical formula of the high-nickel ternary positive electrode material matrix doped with M1, M2, and W is Li₁₊ₐ[NiₓCo_{y}Mn_{z}M1_{b}M2_{c}W_{d}]O₂, where 0.65 ≤ x < 1, 0 ≤ y < 0.3, 0 ≤ z < 0.3, 0 < a < 0.2, 0 < b < 0.1, 0 < c < 0.1, 0 < d < 0.1, x + y + z + b + c + d = 1, and optionally, 0.8 ≤ x < 1;
step S2: mixing and sintering a Co-containing compound and the high-nickel ternary positive electrode material matrix doped with M1, M2, and W, to obtain a high-nickel ternary positive electrode material doped with Co in a surface layer and coated with a Co-containing compound on a surface; and
step S3: mixing and sintering an Al-containing compound, a B-containing compound, and the high-nickel ternary positive electrode material doped with Co in the surface layer and coated with a Co-containing compound on the surface, to obtain a modified high-nickel ternary positive electrode material.

In any embodiment, in step S1, a sintering temperature is 700-950°C, a sintering duration is 10-20 h, and a sintering atmosphere is air or O₂. When the sintering temperature in step S1 is within an appropriate temperature range, the capacity, cycling performance, and storage performance of the secondary battery can be further improved.

In any embodiment, a particle size of the Co-containing compound is 0.001-10 µm, optionally 0.001-1 µm. The Co-containing compound with a particle size being within the given range can be uniformly coated on a surface of the high-nickel ternary positive electrode material, thereby further improving the cycling performance of the secondary battery.

In any embodiment, in step S2, a sintering temperature is 500-800°C, optionally 550-750°C; a sintering duration is 5-15 h, optionally 5-10 h; and a sintering atmosphere is air or O₂. When the sintering temperature in step S2 is within the given range, reactions between the Co-containing compound and lithium impurities on the surface of the ternary positive electrode material can occur, and the Co-containing compound can be firmly applied on the surface of the ternary positive electrode material, thereby reducing the lithium impurities on the surface and reducing interface side reactions, to further improve the cycling performance of the secondary battery.

In any embodiment, in step S3, a sintering temperature is 200-500°C, optionally 200-400°C; a sintering duration is 5-15 h, optionally 5-10 h; and a sintering atmosphere is air or O₂. When the sintering temperature in step S3 is within the given range, the Al-containing compound and the B-containing compound can be firmly applied on the surface of the ternary positive electrode material, thereby improving interface reactions for the ternary positive electrode material, to further improve the cycling performance of the secondary battery.

A third aspect of this application provides a secondary battery, including the modified high-nickel ternary positive electrode material according to the first aspect of this application or the modified high-nickel ternary positive electrode material prepared by using the method according to the second aspect of this application.

A fourth aspect of this application provides a battery module, including the secondary battery according to the third aspect of this application.

A fifth aspect of this application provides a battery pack, including the battery module according to the fourth aspect of this application.

A sixth aspect of this application provides an electric apparatus, including at least one of the secondary battery according to the third aspect of this application, the battery module according to the fourth aspect of this application, and the battery pack according to the fifth aspect of this application.

The battery module, the battery pack, and the electric apparatus in this application include the secondary battery in this application, and therefore have at least advantages that are the same as those of the secondary battery.

### BRIEF DESCRIPTION OF DRAWINGS

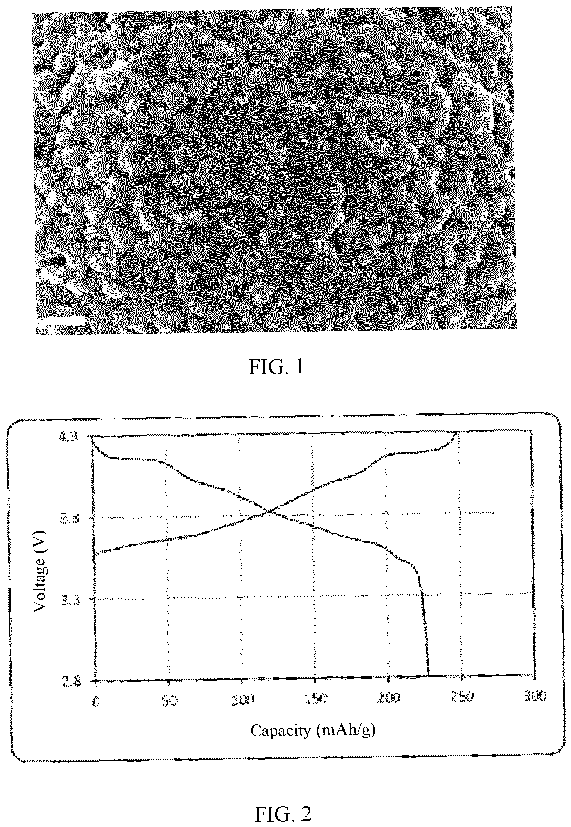

FIG. 1 is a SEM image of a modified high-nickel ternary positive electrode material prepared in Example 1-1 of this application.
FIG. 2 is first charge and discharge curves of a button cell made from the modified high-nickel ternary positive electrode material prepared in Example 1-1 of this application.

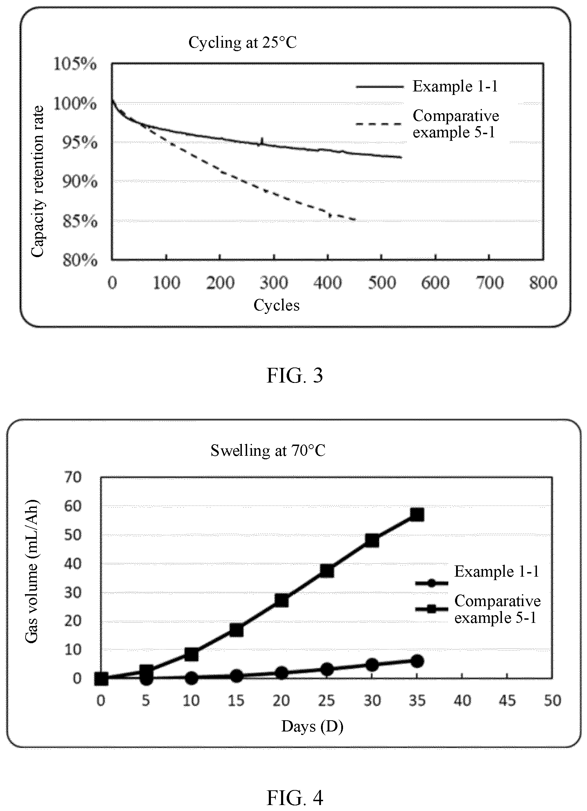

FIG. 3 is 25°C cycling comparison curves of full cells made from the modified high-nickel ternary positive electrode material prepared in Comparative Example 5-1 and Example 1-1 of this application.
FIG. 4 is gas swelling comparison curves of full cells stored at 70°C and made from the modified high-nickel ternary positive electrode material prepared in Comparative Example 5-1 and Example 1-1 of the present invention.
FIG. 5 is a schematic diagram of a secondary battery according to an embodiment of this application.
FIG. 6 is an exploded view of the secondary battery according to the embodiment of this application in FIG. 5.
FIG. 7 is a schematic diagram of a battery module according to an embodiment of this application.
FIG. 8 is a schematic diagram of a battery pack according to an embodiment of this application.
FIG. 9 is an exploded view of the battery pack according to the embodiment of this application in FIG. 8.
FIG. 10 is a schematic diagram of an electric apparatus using a secondary battery as a power source according to an embodiment of this application.

Reference signs in the accompanying drawings are described as follows:
1. battery pack; 2. upper box body; 3. lower box body; 4. battery module; 5. secondary battery; 51. housing; 52. electrode assembly; and 53. top cover assembly.

### DESCRIPTION OF EMBODIMENTS

The following specifically discloses embodiments of a modified high-nickel ternary positive electrode material and a preparation method therefor, a secondary battery, a battery module, a battery pack, and an electric apparatus in this application with appropriate reference to detailed descriptions of accompanying drawings. However, there may be cases where unnecessary detailed descriptions are omitted. For example, detailed description of a well-known matter or repeated description of an actually identical structure has been omitted. This is to prevent the following descriptions from becoming unnecessarily cumbersome, facilitating understanding of those skilled in the art. In addition, the accompanying drawings and the following descriptions are provided for those skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that special range. Ranges defined in this method may or may not include end values, and any combinations may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed sequentially or randomly, and preferably, are performed sequentially. For example, a method including steps (a) and (b) indicates that the method may include steps (a) and (b) performed sequentially, or may include steps (b) and (a) performed sequentially. For example, that the method may further include step (c) indicates that step (c) may be added to the method in any sequence. For example, the method may include steps (a), (b), and (c), or steps (a), (c), and (b), or steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

### [Modified high-nickel ternary positive electrode material]

This application provides a modified high-nickel ternary positive electrode material, including an inner core, an inner coating layer, and an outer coating layer, where
the inner core includes a high-nickel ternary positive electrode material matrix, the matrix being doped with M1, M2, and W, where M1 is one of Mo, Zr, Ti, Sb, Nb, and Te, M2 is one of Mg, Al, Ca, Zn, and Sr, and a chemical formula of the high-nickel ternary positive electrode material matrix doped with M1, M2, and W is Li₁₊ₐ[NiₓCo_{y}Mn_{z}M1_{b}M2_{c}W_{d}]O₂, where 0.65 ≤ x < 1, 0 ≤ y < 0.3, 0 ≤ z < 0.3, 0 < a < 0.2, 0 < b < 0.1, 0 < c < 0.1, 0 < d < 0.1, x + y + z + b + c + d = 1, and optionally, 0.8 ≤ x < 1;
a surface layer of the inner core is also doped with Co; and
the inner coating layer is a Co-containing compound, and the outer coating layer comprises an Al-containing compound and a B-containing compound.

In this application, the high-nickel ternary positive electrode material being doped and coated can improve cycling performance and safety performance of a lithium-ion secondary battery under the premise of guaranteeing a high capacity of the lithium-ion secondary battery.

Regardless of any theory, firstly, in this application, the high-nickel ternary positive electrode material is doped with three kinds of ions (namely M1, M2, and W) synergistically, so that as compared with doping of single ions, structural stability of the high-nickel ternary positive electrode material can be more effectively increased, thereby significantly improving cycling performance and thermal stability of the secondary battery. Secondly, in this application, the surface layer of the high-nickel ternary positive electrode material is also doped with Co, so that an amount of high-valent nickel ions contained in the surface layer of the high-nickel ternary positive electrode material can be effectively reduced, thereby reducing side reactions between the high-valent nickel ions and the electrolyte and further improving the cycling performance and storage performance of the secondary battery. Finally, in this application, the high-nickel ternary positive electrode material is uniformly coated with an inner layer containing a Co compound and an outer layer with an Al-containing compound and a B-containing compound, effectively reducing an amount of lithium impurities contained on the surface and allowing the lithium impurities to react with the Co-containing compound to generate Li₂CoO₃ and react with the B-containing compound to generate LiBO₂, LiB₃O₅, Li₂B₄O₇ or their mixtures, to make the lithium impurities become active lithium, thereby improving the capacity and rate performance of the high-nickel ternary positive electrode material. In addition, a synergistic effect of the inner layer having the Co-containing compound and the outer layer having the B-containing compound and the Al-containing compound can further effectively inhibit the interface side reactions between the high-nickel ternary positive electrode material and the electrolyte, further improving the cycling, storage, and safety performance of the secondary battery.

The inventors have found through in-d-depth research that when the modified high-nickel ternary positive electrode material in this application satisfies the foregoing design conditions and optionally satisfies one or more of the following conditions, performance of the high-nickel ternary positive electrode material can be further improved.

In some embodiments, a doping amount of M1 is ≥ a doping amount of M2 or W.

In some embodiments, a ratio of the doping amount of M1 to a sum of the doping amounts of M2 and W is 1:(0.1-2), optionally 1:(0.5-1.5).

The ratio of the doping amount of M1 to the sum of the doping amounts of M2 and W being controlled within the given range can ensure that the high-nickel ternary positive electrode material has a relatively high capacity and can improve structural stability of the material to the greatest extent, thereby further improving the cycling performance of the secondary battery.

The element M1 has little effect on capacity reduction of the high-nickel ternary positive electrode material, and the elements M2 and W have relatively great effect on the capacity reduction. Therefore, when the ratio of the doping amount of M1 to the sum of the doping amounts of M2 and W is within the foregoing range, the capacity of the secondary battery can be maintained or increased, and the cycling and storage performance of the secondary battery can be further improved.

In some embodiments, a thickness d of the surface layer satisfies 0 < d < 3 µm, optionally 0 < d < 2 µm.

When the thickness d of the surface layer is within the given range, the cycling performance of the battery can be further improved. Therefore, the following situation can be avoided: If the thickness d of the surface layer is too large, the matrix composition may be greatly changed, and an amount of Ni contained in the entire matrix may be reduced, thereby significantly reducing the capacity of the ternary positive electrode material.

In some embodiments, a sum of a doping amount of Co in the surface layer and a coating amount of the Co-containing compound is 100-20000 ppm, optionally 1000-13000 ppm; a coating amount of the Al-containing compound is 100-3000 ppm, optionally 500-2000 ppm; and a coating amount of the B-containing compound is 100-2000 ppm, optionally 500-1500 ppm, where each of the doping amount in the surface layer and the coating amounts is calculated based on a corresponding element in a compound with respect to the modified high-nickel ternary positive electrode material.

When the sum of the doping amount of Co in the surface layer and the coating amount of the Co-containing compound is within the given range, the cycling performance of the battery can be further improved. Therefore, the following situation can be avoided: When the sum of the doping amount of Co in the surface layer and the coating amount of the Co-containing compound is too large, excessive inactive Co compound may remain on the surface of the high-nickel ternary positive electrode material, affecting the capacity of the material and the cycling performance of the secondary battery.

When the coating amount of the Al-containing compound and the coating amount of the B-containing compound are within the given ranges, the cycling performance of the battery can be further improved.

In some embodiments, a total thickness of the inner and outer coating layers is 0.001-1 µm.

In some embodiments, the coating amount of the Al-containing compound and the coating amount of the B-containing compound satisfy that a weight ratio of Al to B is (0.5-2): 1, where each of the coating amounts is calculated based on a corresponding element in a compound with respect to the modified high-nickel ternary positive electrode material.

When the coating amount of the Al-containing compound and the coating amount of the B-containing compound satisfy the given relationship, the capacity and cycling performance of the secondary battery can be further improved. Therefore, the following situation can be avoided: When the weight ratio of Al to B in the outer coating layer is greater than 2: 1, inactive Al-containing compound may affect the ion transport kinetic activity and further affect the capacity and cycling performance of the secondary battery.

In some embodiments, a doping amount of W is 100-2000 ppm, optionally 100-1500 ppm; the doping amount of M1 is 2000-4000 ppm; and the doping amount of M2 is 500-2000 ppm, where each of the doping amounts is calculated based on a corresponding element with respect to the modified high-nickel ternary positive electrode material.

When the doping amounts of M1, M2, and W are within the given ranges, the structural stability of the high-nickel ternary positive electrode material can be further improved, thereby further improving the cycling performance and storage performance of the secondary battery.

In some embodiments, a sum of the doping amount of Co in the surface layer and coating amounts of the Co-containing compound, the Al-containing compound, and the B-containing compound is 1000-22000 ppm, optionally 1000-15000 ppm, where each of the doping amount in the surface layer and the coating amounts is calculated based on a corresponding element in a compound with respect to the modified high-nickel ternary positive electrode material.

In some embodiments, a volume particle size distribution span of the modified high-nickel ternary positive electrode material satisfies (Dᵥ90 - Dᵥ10)/Dᵥ50 ≥ 1.1, optionally (Dᵥ90 - Dᵥ10)/Dᵥ50 ≥ 1.2.

In this application, volume-based particle sizes Dᵥ10, Dᵥ50, and Dᵥ90 of the modified high-nickel ternary positive electrode material are concepts well known in the art. Specifically, Dᵥ10 is the particle size at 10% in the cumulative volume distribution, generally measured in µm. Dᵥ50 is the particle size at 50% in the cumulative volume distribution. Dᵥ90 is the particle size at 90% in the cumulative volume distribution. The foregoing volume-based particle sizes Dᵥ10, Dᵥ50, Dᵥ90 of the ternary precursor can be determined by using a method well known in the art. For example, the particle sizes may be determined using a Malvern 2000 instrument in accordance with the GB/T 19077-2016/ISO 13320:2009 particle size distribution laser diffraction method.

In some embodiments, a powder compacted density of the modified high-nickel ternary positive electrode material under a pressure of 5 tons is ≥ 3.4 g/cc, optionally ≥ 3.5 g/cc.

When the modified high-nickel ternary positive electrode material has a relatively wide volume particle size distribution span and a relatively high powder compacted density, the volumetric energy density of the high-nickel ternary positive electrode material can be significantly increased.

This application further provides a method for preparing a modified high-nickel ternary positive electrode material, including:
step S1: mixing and sintering a lithium salt, a high-nickel ternary precursor doped with W, an M1-containing compound, and an M2-containing compound, to obtain a high-nickel ternary positive electrode material matrix doped with M1, M2, and W, where a chemical formula of the high-nickel ternary precursor doped with W is (Ni_{X}Co_{Y}Mn_{Z}W_{D})(OH)₂, where 0.65 ≤ X < 1, 0 ≤ Y < 0.3, 0 ≤ Z < 0.3, 0 < D < 0.1, M1 is one of Mo, Zr, Ti, Sb, Nb, and Te, M2 is one of Mg, Al, Ca, Zn, and Sr, and a chemical formula of the high-nickel ternary positive electrode material matrix doped with M1, M2, and W is Li₁₊ₐ[NiₓCo_{y}Mn_{z}M1_{b}M2_{c}W_{d}]O₂, where 0.65 ≤ x < 1, 0 ≤ y < 0.3, 0 ≤ z < 0.3, 0 < a < 0.2, 0 < b < 0.1, 0 < c < 0.1, 0 < d < 0.1, x + y + z + b + c + d = 1, and optionally, 0.8 ≤ x < 1;
step S2: mixing and sintering a Co-containing compound and the high-nickel ternary positive electrode material matrix doped with M1, M2, and W, to obtain a high-nickel ternary positive electrode material doped with Co in a surface layer and coated with a Co-containing compound on a surface; and
step S3: mixing and sintering an Al-containing compound, a B-containing compound, and the high-nickel ternary positive electrode material doped with Co in the surface layer and coated with a Co-containing compound on the surface, to obtain a modified high-nickel ternary positive electrode material.

In some embodiments, in step S1, a sintering temperature is 700-950°C, a sintering duration is 10-20 h, and a sintering atmosphere is air or O₂.

With the sintering process in step S1, a high-nickel ternary positive electrode material matrix with excellent crystal structure can be obtained by sintering, and synergistic doping of three elements (that is, M1, M2, and W) can be uniformly and effectively performed. Especially when the sintering temperature in step S1 is within an appropriate temperature range, the capacity, cycling performance, and storage performance of the secondary battery can be further improved.

In the embodiments of this application, the lithium salt, the M1-containing compound, and the M2-containing compound are not limited to any particular type, and may be selected based on actual needs. For example, the lithium salt is lithium hydroxide, lithium carbonate, or lithium nitrate; the M1-containing compound and the M2-containing compound are oxides or carbonates of M1 and M2, respectively.

In the embodiments of this application, a synthesis method of the high-nickel ternary precursor doped with W includes:
(1): using a nickel salt, a cobalt salt, a manganese salt, and pure water to prepare a nickel-cobalt-manganese mixed metal salt solution, and adding a tungsten-containing compound to the foregoing solution to obtain a nickel-cobalt-manganese mixed metal salt solution doped with W salts;
(2): adding pure water as a base solution in a reactor, starting stirring and maintaining a reaction temperature, adding an alkali solution and an ammonia solution to adjust the pH value and ammonia concentration of the base solution, and adding the nickel-cobalt-manganese mixed metal salt solution doped with W salt, an alkali solution, and an ammonia solution into the reactor to maintain the pH value and ammonia concentration unchanged, so as to synthesize a seed crystal slurry; and
(3): adding pure water as a base solution in a reactor, adding the seed crystal slurry, starting stirring and maintaining a reaction temperature, adding an alkali solution and an ammonia solution to adjust the pH value and ammonia concentration of the base solution, and adding the nickel-cobalt-manganese mixed metal salt solution doped with W salt, an alkali solution, an ammonia solution, and the seed crystal slurry into the reactor to maintain the pH value and ammonia concentration unchanged, so as to obtain a high-nickel ternary precursor doped with W.

In some embodiments, in step (1), a concentration of the nickel-cobalt-manganese mixed metal salt solution is 0.5-2.5 mol/L.

In the embodiments of this application, the lithium salt, the cobalt salt, the manganese salt, and the tungsten-containing compound are not limited to any particular type, and may be selected based on actual needs. For example, the nickel salt is one of nickel nitrate, nickel acetate, and nickel sulfate; the cobalt salt is one of cobalt nitrate, cobalt acetate, and cobalt sulfate; the manganese salt is one of manganese nitrate, manganese acetate, and manganese sulfate; and the tungsten-containing compound is sodium tungstate.

In some embodiments, in steps (2) and (3), the pure water added accounts for 10-50% of the capacity of the reactor.

In some embodiments, in steps (2) and (3), the alkaline solution is a sodium hydroxide solution with a concentration of 1-10 mol/L.

In some embodiments, in steps (2) and (3), a concentration of the ammonia solution is 2-14 mol/L.

In some embodiments, in step (2), the pH is 11.5-12.5, optionally 11.8-12.2; the ammonia concentration is 0.2-0.6 mol/L, optionally 0.3-0.5 mol/L; a stirring linear velocity is 5.0-7.0 m/s; and the reaction temperature is 40-75°C.

In some embodiments, in step (2), a flow ratio of the nickel-cobalt-manganese mixed metal salt solution doped with W salt, the alkali solution, and the ammonia solution is 18.75:15:1.

In some embodiments, in step (3), the pH is 11.0-12.0, optionally 11.1-11.7; the ammonia concentration is 0.2-0.6 mol/L, optionally 0.3-0.5 mol/L; a stirring linear velocity is 3.0-6.0 m/s; and the reaction temperature is 40-75°C.

In some embodiments, in step (3), a flow ratio of the nickel-cobalt-manganese mixed metal salt solution doped with W salt, the alkali solution, the ammonia solution, and the seed crystal slurry is 18.75:15:1:2.8.

In some embodiments, the volume-based median particle size Dᵥ50 of the seed crystal slurry is 1-5 µm; and the volume-based median particle size Dᵥ50 of the high-nickel ternary precursor doped with W is 5-15 µm, optionally 5-10 µm.

In some embodiments, a volume particle size distribution span (Dᵥ90 - Dᵥ10)/Dᵥ50 of the high-nickel ternary precursor doped with W is ≥ 1.3.

A bulk phase structure of the high-nickel ternary precursor doped with W synthesized by this method is uniformly doped with element W and has a relatively wide volume particle size distribution span, so that the high-nickel ternary positive electrode material obtained by sintering has relatively wide particle size distribution and relatively high powder compacted density.

In some embodiments, in step S2, the Co-containing compound is one or more of Co₃O₄, Co(OH)₂, CoO, CoOOH, cobalt acetate, cobalt oxalate, and CoCO₃.

In some embodiments, in step S2, a particle size of the Co-containing compound is 0.001-10 µm, optionally 0.001-1 µm.

The Co-containing compound with a particle size being within the given range can be uniformly coated on a surface of the high-nickel ternary positive electrode material, to reduce interface side reactions between the material and the electrolyte, thereby further improving the cycling performance of the secondary battery.

In some embodiments, in step S2, a sintering temperature is 500-800°C, optionally 550-750°C; a sintering duration is 5-15 h, optionally 5-10 h; and a sintering atmosphere is air or O₂.

With the sintering temperature in step S2 being controlled, reactions between the Co-containing compound and lithium impurities on the surface of the ternary positive electrode material can occur, and the Co-containing compound can be firmly applied on the surface of the ternary positive electrode material, thereby reducing the lithium impurities on the surface and reducing interface side reactions, to further improve the cycling performance of the secondary battery.

In some embodiments, in step S3, the Al-containing compound is one or more of Al₂O₃, Al(OH)₃, Al₂(SO₄)₃, AlCl₃, and Al(NO)₃.

In some embodiments, in step S3, the B-containing compound is one or more of BCl₃, B₂(SO₄)₃, B(NO₃)₃, BN, B₂O₃, BF₃, BBr₃, BI₃, H₂BO₅P, H₃BO₃, C₅H₆B(OH)₂, C₃H₉B₃O₆, (C₂H₅O)₃B, and (C₃H₇O)₃B.

In some embodiments, in step S3, a sintering temperature is 200-500°C, optionally 200-400°C; a sintering duration is 5-15 h, optionally 5-10 h; and a sintering atmosphere is air or O₂.

With the sintering temperature in step S3 being controlled, the Al-containing compound and the B-containing compound can be firmly applied on the surface of the ternary positive electrode material, thereby improving interface reactions for the material, to further improve the cycling performance of the secondary battery.

In addition, the following describes a secondary battery, a battery module, a battery pack, and an electric apparatus in this application with appropriate reference to the accompanying drawings.

An embodiment of this application provides a secondary battery.

Normally, the secondary battery includes a positive electrode plate, a negative electrode plate, an electrolyte, and a separator. In a charge and discharge process of the battery, active ions are intercalated and deintercalated back and forth between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

### [Positive electrode plate]

The positive electrode plate includes a positive electrode current collector and a positive electrode film layer disposed on at least one surface of the positive electrode current collector, and the positive electrode film layer includes the modified high-nickel ternary positive electrode material according to the first aspect of this application.

For example, the positive electrode current collector includes two opposite surfaces in a thickness direction of the positive electrode current collector, and the positive electrode film layer is disposed on either or both of the two back-to-back surfaces of the positive electrode current collector.

In some embodiments, the positive electrode current collector may be a metal foil or a composite current collector. For example, the metal foil may be an aluminum foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode film layer may further optionally include a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manners: the constituents used for preparing the positive electrode plate, for example, the positive electrode active material, the conductive agent, the binder, and any other constituent, are dispersed in a solvent (for example, N-methylpyrrolidone) to form a positive electrode slurry. The positive electrode slurry is applied onto the positive electrode current collector, and processes such as drying and cold pressing are performed to obtain the positive electrode plate.

### [Negative electrode plate]

The negative electrode plate includes a negative electrode current collector and a negative electrode film layer disposed on at least one surface of the negative electrode current collector, and the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil or a composite current collector. For example, the metal foil may be a copper foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, and may also use other conventional materials that can be used as the negative electrode active material of the battery. One type of these negative electrode active materials may be used alone, or two or more types may be used in combination.

In some embodiments, the negative electrode film layer may further optionally include a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other auxiliaries such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, and processes such as drying and cold pressing are performed to obtain the negative electrode plate.

### [Electrolyte]

The electrolyte conducts ions between the positive electrode plate and the negative electrode plate. The electrolyte is not specifically limited to any particular type in this application, and may be selected as required. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate (EC), propylene carbonate, ethyl methyl carbonate, diethyl carbonate (DEC), dimethyl carbonate (DMC), dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the liquid electrolyte further optionally includes an additive. For example, the additive may include a negative electrode film-forming additive, a positive electrode film-forming additive, or may include an additive that can improve some performance of a battery, for example, an additive for improving over-charge performance of a battery, an additive for improving high-temperature performance or low-temperature performance of a battery, and the like.

### [Separator]

In some embodiments, the secondary battery further includes a separator. The separator is not limited to any particular type in this application, and may be any commonly known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As an example of the plastic, polypropylene, polybutylene terephthalate, and polybutylene succinate may be listed.

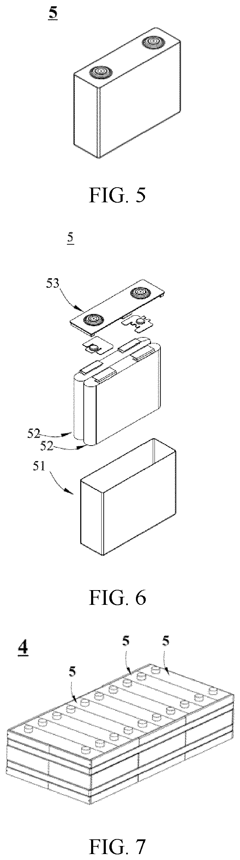

The secondary battery is not limited to any specific shape in this application and may be cylindrical, rectangular, or any other shape. For example, FIG. 5 shows a secondary battery 5 of a square structure as an example.

In some embodiments, referring to FIG. 6, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening, to seal the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual needs.

In some embodiments, the secondary battery may be used to assemble a battery module, and the battery module may include one or more secondary batteries. The specific quantity may be chosen by persons skilled in the art based on use and capacity of the battery module.

FIG. 7 shows a battery module 4 as an example. Refer to FIG. 7. In the battery module 4, a plurality of secondary batteries 5 may be sequentially arranged in a length direction of the battery module 4. Certainly, the secondary batteries 5 may alternatively be arranged in any other manner. Further, the plurality of secondary batteries 5 may be fastened by using fasteners.

Optionally, the battery module 4 may further include a housing with an accommodating space, and the plurality of secondary batteries 5 are accommodated in the accommodating space.

In some embodiments, the battery modules may be assembled into a battery pack, and the battery pack may include one or more battery modules. A specific quantity may be chosen by persons skilled in the art based on use and capacity of the battery pack.

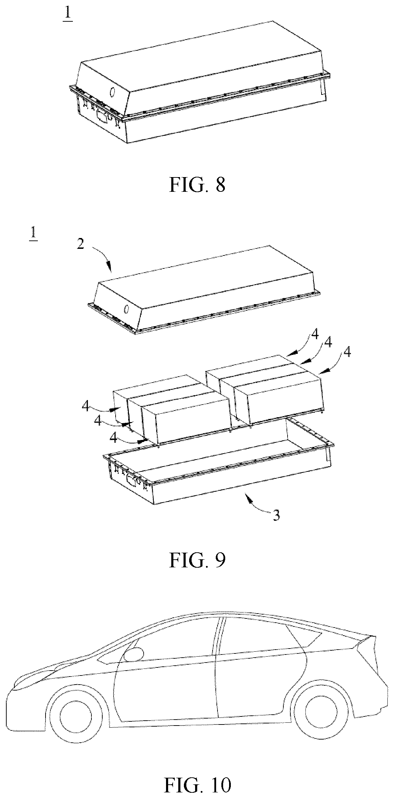

FIG. 8 and FIG. 9 show a battery pack 1 as an example. Refer to FIG. 8 and FIG. 9. The battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes more than one of the secondary battery, the battery module, or the battery pack provided in this application. The secondary battery, the battery module, or the battery pack may be used as a power source for the electric apparatus, or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

The secondary battery, the battery module, or the battery pack may be selected for the electric apparatus based on requirements for using the electric apparatus.

FIG. 10 shows an electric apparatus as an example. The electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the electric apparatus may be a mobile phone, a tablet computer, a notebook computer, or the like. The electric apparatus is usually required to be light and thin, and a secondary battery may be used as a power source.

### Examples

The following describes examples of this application. The examples described below are illustrative and only used to explain this application, and cannot be construed as limitations on this application. Examples whose technical solutions or conditions are not specified are made in accordance with technical solutions or conditions described in literature in the field, or made in accordance with product instructions. The reagents or instruments used are all conventional products that are commercially available if no manufacturer is indicated.

### Example 1-1

[Preparation of high-nickel ternary precursor doped with tungsten]
(1): Nickel sulfate, cobalt sulfate, manganese sulfate at a molar ratio of 90:5:5 of nickel, cobalt, and manganese were added with pure water to prepare a nickel-cobalt-manganese mixed metal salt solution with a concentration of 2 mol/L, sodium tungstate was added with an amount of 1000 ppm in terms of tungsten, and a nickel-cobalt-manganese mixed metal salt solution doped with tungsten salts was obtained;
(2): 20 L pure water was added into a 100 L reactor, and stirred at a stirring velocity of 6 m/s at a constant temperature of 45°C. Then 5 mol/L NaOH solution was added until a pH in the reactor was 12.0, and 9 mol/L ammonia solution was added until an ammonia concentration in the reactor was 0.4 mol/L. The nickel-cobalt-manganese mixed metal salt solution doped with tungsten salts, a NaOH solution, and an ammonia solution were added into the reactor, where a flow ratio of the nickel-cobalt-manganese mixed metal salt solution doped with tungsten salts to the NaOH solution was 5:4 and a flow ratio of the NaOH solution to the ammonia solution was 15:1, so as to keep the ammonia concentration and pH constant in the reactor, with continuous reactions to synthesize a seed crystal slurry; and
(3): 20 L pure water and 2 kg of the seed crystal slurry were added into another 100 L reactor, and stirred at a stirring velocity of 5 m/s at a constant temperature of 50°C. Then 5 mol/L NaOH solution was added until a pH in the reactor was 11.5, and 9 mol/L ammonia solution was added until an ammonia concentration in the reactor was 0.3 mol/L. The nickel-cobalt-manganese mixed metal salt solution doped with tungsten salts, a NaOH solution, an ammonia solution, and the seed crystal slurry were added into the reactor, where a flow ratio of the nickel-cobalt-manganese mixed metal salt solution doped with tungsten salts to the NaOH solution was 5:4, a flow ratio of the NaOH solution to the ammonia solution was 15:1, and a flow ratio of the seed crystal slurry to the nickel-cobalt-manganese mixed metal salt solution doped with tungsten salts was 0.15, to maintain the ammonia concentration and pH constant in the reactor unchanged, so as to continuously react to synthesize a high-nickel ternary precursor doped with tungsten. The slurry was then centrifuged at 300 rpm for 20 min, washed with deionized water, filtered, and dried at 105°C for 10 h, and a high-nickel ternary precursor doped with tungsten was obtained, with a molecular formula of (Ni_{0.8995}Co_{0.05}Mn_{0.05}W_{0.0005})(OH)₂, a particle size Dᵥ50 of 8 µm, and a volume particle size distribution span (Dᵥ90 - Dᵥ10)/Dᵥ50 of 1.35.

### [Preparation of modified high-nickel ternary positive electrode material]

S1: Lithium hydroxide, the high-nickel ternary precursor doped with tungsten, TiO₂, and Al₂O₃ were put into a coulter mixer and mixed, where a molar ratio of Li to a sum of nickel, cobalt, and manganese was 1.05, an amount of TiO₂ was 2500 ppm in terms of Ti, and an amount of Al₂O₃ was 1000 ppm in terms of Al. A resulting mixture was put into a kiln for sintering at a sintering temperature of 750°C for 15 h in a sintering atmosphere of O₂ to obtain a high-nickel ternary positive electrode material matrix doped with Ti, Al, and W, with a molecular formula of Li_{1.05}[Ni_{0.8918}Co_{0.0495}Mn_{0.0495}Ti_{0.005}Al_{0.0037}W_{0.0005}]O₂;

S2: CoO and the high-nickel ternary positive electrode material matrix doped with Ti, Al, and W were put into the coulter mixer and mixed, where an amount of CoO was 13000 ppm in terms of Co. A resulting mixture was put into a kiln for sintering at a sintering temperature of 600°C for 5 h in a sintering atmosphere of O₂ to obtain a high-nickel ternary positive electrode material doped with Co in a surface layer and coated with a Co-containing compound on a surface; and

S3: Al₂O₃, B₂O₃, and the high-nickel ternary positive electrode material doped with Co in a surface layer and coated with a Co-containing compound on a surface were put into the coulter mixer and mixed, where an amount of Al₂O₃ was 1000 ppm in terms of Al, an amount of B₂O₃ was 1000 ppm in terms of B, and a weight ratio of Al to B was 1:1. A resulting mixture was put into a kiln for sintering at a sintering temperature of 250°C for 6 h in a sintering atmosphere of O₂ to obtain a modified high-nickel ternary positive electrode material product. A total thickness of inner and outer coating layers of the product was 0.54 µm.

### Example 1-2

Preparation of a modified high-nickel ternary positive electrode material basically followed that of Example 1-1, except that in the preparation of a high-nickel ternary precursor doped with tungsten, a molar ratio of nickel, cobalt and manganese in the nickel-cobalt-manganese mixed metal salt solution was 80:10:10, and a molecular formula of the obtained high-nickel ternary precursor doped with tungsten was (Ni_{0.7996}Co_{0.09995}Mn_{0.09995}W_{0.0005})(OH)₂. In the preparation of the modified high-nickel ternary positive electrode material, in step S1, a high-nickel ternary positive electrode material matrix doped with Ti, Al, and W was obtained, with a molecular formula of Li_{1.05}[Ni_{0.7927}Co_{0.0991}Mn_{0.0991}Ti_{0.005}Al_{0.0036}W_{0.0005}]O₂.

### Example 1-3

Preparation of a modified high-nickel ternary positive electrode material basically followed that of Example 1-1, except that in the preparation of a high-nickel ternary precursor doped with tungsten, a molar ratio of nickel, cobalt and manganese in the nickel-cobalt-manganese mixed metal salt solution was 70:15:15, and a molecular formula of the obtained high-nickel ternary precursor doped with tungsten was (Ni_{0.6997}Co_{0.1499}Mn_{0.1409}W_{0.0005})(OH)₂. In the preparation of the modified high-nickel ternary positive electrode material, in step S1, a high-nickel ternary positive electrode material matrix doped with Ti, Al, and W was obtained, with a molecular formula of Li_{1.05}[Ni_{0.6936}Co_{0.1486}Mn_{0.1486}Ti_{0.005}Al_{0.0037}W_{0.0005}]O₂.

### Comparative Example 1-1

Preparation of a modified high-nickel ternary positive electrode material basically followed that of Example 1-1, except that in the preparation of the modified high-nickel ternary positive electrode material, in step S1, no TiO₂ was added, and a high-nickel ternary positive electrode material matrix doped with Al and W was obtained, with a molecular formula of Li_{1.05}[Ni_{0.8963}Co_{0.0498}Mn_{0.0498}Al_{0.0036}W_{0.0005}]O₂.

### Comparative Example 1-2

Preparation of a modified high-nickel ternary positive electrode material basically followed that of Example 1-1, except that in the preparation of the modified high-nickel ternary positive electrode material, in step S1, no Al₂O₃ was added, and a high-nickel ternary positive electrode material matrix doped with Ti and W was obtained, with a molecular formula of Li_{1.05}[Ni_{0.895}Co_{0.0497}Mn_{0.0497}Ti_{0.0051}W_{0.0005}]O₂.

### Comparative Example 1-3

Preparation of a modified high-nickel ternary positive electrode material basically followed that of Example 1-1, except that in the preparation of a high-nickel ternary precursor doped with tungsten, no sodium tungstate was added, and a molecular formula of an obtained high-nickel ternary precursor was (Ni_{0.90}Co_{0.05}Mn_{0.05})(OH)₂. In the preparation of the modified high-nickel ternary positive electrode material, in step S1, a high-nickel ternary positive electrode material matrix doped with Ti and Al was obtained, with a molecular formula of Li_{1.05}[Ni_{0.8923}Co_{0.0496}Mn_{0.0496}Ti_{0.005}Al_{0.0035}]O₂.

### Comparative Example 1-4

Preparation of a modified high-nickel ternary positive electrode material basically followed that of Example 1-1, except that step S2 was not performed, and a total thickness of inner and outer coating layers of a final product was 0.11 µm.

### Comparative Example 1-5

Preparation of a modified high-nickel ternary positive electrode material basically followed that of Example 1-1, except that step S3 was not performed, and a total thickness of inner and outer coating layers of a final product was 0.40 µm.

### Comparative Example 1-6

Preparation of a modified high-nickel ternary positive electrode material basically followed that of Example 1-1, except that in step S3, B₂O₃ was not added, and a total thickness of inner and outer coating layers of a final product was 0.49 µm.

### Comparative Example 1-7

Preparation of a modified high-nickel ternary positive electrode material basically followed that of Example 1-1, except that in step S3, no Al₂O₃ was added, and a total thickness of inner and outer coating layers of a final product was 0.50 µm.

### Example 2-1

Preparation of a modified high-nickel ternary positive electrode material basically followed that of Example 1-1, except that in the preparation of the modified high-nickel ternary positive electrode material, in step S1, TiO₂ was replaced with ZrO₂, Al₂O₃ was replaced with SrCO₃, and a high-nickel ternary positive electrode material matrix doped with Zr, Sr, and W was obtained, with a molecular formula of Li_{1.05}[Ni_{0.8961}Co_{0.0498}Mn_{0.0498}Zr_{0.0027}Sr_{0.0011}W_{0.0005}]O₂.

### Example 2-2

Preparation of a modified high-nickel ternary positive electrode material basically followed that of Example 1-1, except that in the preparation of the modified high-nickel ternary positive electrode material, in step S1, TiO₂ was replaced with Sb₂O₅, Al₂O₃ was replaced with MgO, and a high-nickel ternary positive electrode material matrix doped with Sb, Mg, and W was obtained, with a molecular formula of Li_{1.05}[Ni_{0.8941}Co_{0.0497}Mn_{0.0497}Sb_{0.002}Mg_{0.004}W_{0.0005}]O₂.

### Example 2-3

Preparation of a modified high-nickel ternary positive electrode material basically followed that of Example 1-1, except that in the preparation of the modified high-nickel ternary positive electrode material, in step S1, Al₂O₃ was replaced with ZnO, and a high-nickel ternary positive electrode material matrix doped with Ti, Zn, and W was obtained, with a molecular formula of Li_{1.05}[Ni_{0.8937}Co_{0.0496}Mn_{0.0496}Ti_{0.005}Zn_{0.0016}W_{0.0005}]O₂.

### Example 3-1

Preparation of a modified high-nickel ternary positive electrode material basically followed that of Example 1-1, except that in the preparation of a high-nickel ternary precursor doped with tungsten, an amount of sodium tungstate added was 2000 ppm in terms of tungsten, and a molecular formula of an obtained high-nickel ternary precursor doped with tungsten was (Ni_{0.8991}Co_{0.04995}Mn_{0.04995}W_{0.001})(OH)₂. In the preparation of the modified high-nickel ternary positive electrode material, in step S1, an amount of TiO₂ was 2000 ppm in terms of Ti, an amount of Al₂O₃ was 2000 ppm in terms of Al, and a high-nickel ternary positive electrode material matrix doped with Ti, Al, and W was obtained, with a molecular formula of Li_{1.05}[Ni_{0.889}Co_{0.0494}Mn_{0.0494}Ti_{0.004}Al_{0.0072}W_{0.001}]O₂.

### Example 3-2

Preparation of a modified high-nickel ternary positive electrode material basically followed that of Example 1-1, except that in the preparation of a high-nickel ternary precursor doped with tungsten, an amount of sodium tungstate added was 1500 ppm in terms of tungsten, and a molecular formula of an obtained high-nickel ternary precursor doped with tungsten was (Ni_{0.8992}Co_{0.05}Mn_{0.05}W_{0.0008})(OH)₂. In the preparation of the modified high-nickel ternary positive electrode material, in step S1, an amount of TiO₂ was 2000 ppm in terms of Ti, an amount of Al₂O₃ was 1500 ppm in terms of Al, and a high-nickel ternary positive electrode material matrix doped with Ti, Al, and W was obtained, with a molecular formula of Li_{1.05}[Ni_{0.8909}Co_{0.0495}Mn_{0.0495}Ti_{0.004}Al_{0.0053}W_{0.0008}]O₂.

### Example 3-3

Preparation of a modified high-nickel ternary positive electrode material basically followed that of Example 1-1, except that in the preparation of a high-nickel ternary precursor doped with tungsten, an amount of sodium tungstate added was 100 ppm in terms of tungsten, and a molecular formula of an obtained high-nickel ternary precursor doped with tungsten was (Ni_{0.8999}Co_{0.05}Mn_{0.05}W_{0.0001})(OH)₂. In the preparation of the modified high-nickel ternary positive electrode material, in step S1, an amount of TiO₂ was 2000 ppm in terms of Ti, an amount of Al₂O₃ was 1900 ppm in terms of Al, and a high-nickel ternary positive electrode material matrix doped with Ti, Al, and W was obtained, with a molecular formula of Li_{1.05}[Ni_{0.8901}Co_{0.0495}Mn_{0.0495}Ti_{0.004}Al_{0.0068}W_{0.0001}]O₂.

### Example 3-4

Preparation of a modified high-nickel ternary positive electrode material basically followed that of Example 1-1, except that in the preparation of a high-nickel ternary precursor doped with tungsten, an amount of sodium tungstate added was 500 ppm in terms of tungsten, and a molecular formula of an obtained high-nickel ternary precursor doped with tungsten was (Ni_{0.8997}Co_{0.05}Mn_{0.05}W_{0.0003})(OH)₂. In the preparation of the modified high-nickel ternary positive electrode material, in step S1, an amount of TiO₂ was 3000 ppm in terms of Ti, an amount of Al₂O₃ was 1000 ppm in terms of Al, and a high-nickel ternary positive electrode material matrix doped with Ti, Al, and W was obtained, with a molecular formula of Li_{1.05}[Ni_{0.8911}Co_{0.0495}Mn_{0.0495}Ti_{0.006}Al_{0.0036}W_{0.0003}]O₂.

### Example 3-5

Preparation of a modified high-nickel ternary positive electrode material basically followed that of Example 1-1, except that in the preparation of a high-nickel ternary precursor doped with tungsten, an amount of sodium tungstate added was 1900 ppm in terms of tungsten, and a molecular formula of an obtained high-nickel ternary precursor doped with tungsten was (Ni_{0.899}Co_{0.05}Mn_{0.05}W_{0.001})(OH)₂. In the preparation of the modified high-nickel ternary positive electrode material, in step S1, an amount of TiO₂ was 4000 ppm in terms of Ti, an amount of Al₂O₃ was 500 ppm in terms of Al, and a high-nickel ternary positive electrode material matrix doped with Ti, Al, and W was obtained, with a molecular formula of Li_{1.05}[Ni_{0.8902}Co_{0.0495}Mn_{0.0495}Ti_{0.008}Al_{0.0018}W_{0.001}]O₂.

### Example 3-6

Preparation of a modified high-nickel ternary positive electrode material basically followed that of Example 1-1, except that in the preparation of a high-nickel ternary precursor doped with tungsten, an amount of sodium tungstate added was 100 ppm in terms of tungsten, and a molecular formula of an obtained high-nickel ternary precursor doped with tungsten was (Ni_{0.8999}Co_{0.05}Mn_{0.05}W_{0.0001})(OH)₂. In the preparation of the modified high-nickel ternary positive electrode material, in step S1, an amount of TiO₂ was 6000 ppm in terms of Ti, an amount of Al₂O₃ was 500 ppm in terms of Al, and a high-nickel ternary positive electrode material matrix doped with Ti, Al, and W was obtained, with a molecular formula of Li_{1.05}[Ni_{0.8875}Co_{0.0493}Mn_{0.0493}Ti_{0.012}Al_{0.0018}W_{0.0001}]O₂.

### Example 3-7

Preparation of a modified high-nickel ternary positive electrode material basically followed that of Example 1-1, except that in the preparation of a high-nickel ternary precursor doped with tungsten, an amount of sodium tungstate added was 100 ppm in terms of tungsten, and a molecular formula of an obtained high-nickel ternary precursor doped with tungsten was (Ni_{0.8999}Co_{0.05}Mn_{0.05}W_{0.0001})(OH)₂. In the preparation of the modified high-nickel ternary positive electrode material, in step S1, an amount of TiO₂ was 4000 ppm in terms of Ti, an amount of Al₂O₃ was 100 ppm in terms of Al, and a high-nickel ternary positive electrode material matrix doped with Ti, Al, and W was obtained, with a molecular formula of Li_{1.05}[Ni_{0.8923}Co_{0.04906}Mn_{0.0496}Ti_{0.008}Al_{0.0004}W_{0.0001}]O₂.

### Example 3-8

Preparation of a modified high-nickel ternary positive electrode material basically followed that of Example 1-1, except that in the preparation of a high-nickel ternary precursor doped with tungsten, an amount of sodium tungstate added was 3000 ppm in terms of tungsten, and a molecular formula of an obtained high-nickel ternary precursor doped with tungsten was (Ni_{0.8984}Co_{0.05}Mn_{0.05}W_{0.0016})(OH)₂. In the preparation of the modified high-nickel ternary positive electrode material, in step S1, an amount of TiO₂ was 2000 ppm in terms of Ti, an amount of Al₂O₃ was 3000 ppm in terms of Al, and a high-nickel ternary positive electrode material matrix doped with Ti, Al, and W was obtained, with a molecular formula of Li_{1.05}[Ni_{0.8854}Co_{0.0492}Mn_{0.0492}Ti_{0.004}Al_{0.0106}W_{0.0016}]O₂.

### Example 4-1

Preparation of a modified high-nickel ternary positive electrode material basically followed that of Example 1-1, except that in step S2, an amount of CoO was 20000 ppm in terms of Co, and a total thickness of inner and outer coating layers of a final product was 1.0 µm.

### Example 4-2

Preparation of a modified high-nickel ternary positive electrode material basically followed that of Example 1-1, except that in step S2, an amount of CoO was 5000 ppm in terms of Co, and a total thickness of inner and outer coating layers of a final product was 0.32 µm.

### Example 4-3

Preparation of a modified high-nickel ternary positive electrode material basically followed that of Example 1-1, except that in step S2, an amount of CoO was 1000 ppm in terms of Co, and a total thickness of inner and outer coating layers of a final product was 0.18 µm.

### Example 4-4

Preparation of a modified high-nickel ternary positive electrode material basically followed that of Example 1-1, except that in step S2, an amount of CoO was 100 ppm in terms of Co, and a total thickness of inner and outer coating layers of a final product was 0.13 µm.

### Example 4-5

Preparation of a modified high-nickel ternary positive electrode material basically followed that of Example 1-1, except that in step S2, an amount of CoO was 25000 ppm in terms of Co, and a total thickness of inner and outer coating layers of a final product was 1.26 µm.

### Example 4-6

Preparation of a modified high-nickel ternary positive electrode material basically followed that of Example 1-1, except that in step S3, an amount of Al₂O₃ was 3000 ppm in terms of Al, an amount of B₂O₃ was 2000 ppm in terms of B, a weight ratio of Al to B was 1.5:1, and a total thickness of inner and outer coating layers of a final product was 0.60 µm.

### Example 4-7

Preparation of a modified high-nickel ternary positive electrode material basically followed that of Example 1-1, except that in step S3, an amount of Al₂O₃ was 2000 ppm in terms of Al, an amount of B₂O₃ was 1000 ppm in terms of B, a weight ratio of Al to B was 2: 1, and a total thickness of inner and outer coating layer of a final product was 0.58 µm.

### Example 4-8

Preparation of a modified high-nickel ternary positive electrode material basically followed that of Example 1-1, except that in step S3, an amount of Al₂O₃ was 500 ppm in terms of Al, an amount of B₂O₃ was 500 ppm in terms of B, a weight ratio of Al to B was 1: 1, and a total thickness of inner and outer coating layers of a final product was 0.51 µm.

### Example 4-9

Preparation of a modified high-nickel ternary positive electrode material basically followed that of Example 1-1, except that in step S3, an amount of Al₂O₃ was 750 ppm in terms of Al, an amount of B₂O₃ was 1500 ppm in terms of B, a weight ratio of Al to B was 0.5:1, and a total thickness of inner and outer coating layers of a final product was 0.55 µm.

### Example 4-10

Preparation of a modified high-nickel ternary positive electrode material basically followed that of Example 1-1, except that in step S3, an amount of Al₂O₃ was 100 ppm in terms of Al, an amount of B₂O₃ was 100 ppm in terms of B, a weight ratio of Al to B was 1: 1, and a total thickness of inner and outer coating layers of a final product was 0.46 µm.

### Example 4-11

Preparation of a modified high-nickel ternary positive electrode material basically followed that of Example 1-1, except that in step S3, an amount of Al₂O₃ was 3000 ppm in terms of Al, an amount of B₂O₃ was 1000 ppm in terms of B, a weight ratio of Al to B was 3: 1, and a total thickness of inner and outer coating layers of a final product was 0.61 µm.

### Example 4-12

Preparation of a modified high-nickel ternary positive electrode material basically followed that of Example 1-1, except that in step S2, an amount of CoO was 800 ppm in terms of Co, in step S3, an amount of Al₂O₃ was 100 ppm in terms of Al, an amount of B₂O₃ was 100 ppm in terms of B, a weight ratio of Al to B was 1: 1, and a total thickness of inner and outer coating layers of a final product was 0.13 µm.

### Example 5-1

Preparation of a modified high-nickel ternary positive electrode material basically followed that of Example 1-1, except that in step S1, a sintering temperature was 700°C.

### Example 5-2

Preparation of a modified high-nickel ternary positive electrode material basically followed that of Example 1-1, except that in step S1, a sintering temperature was 950°C.

### Comparative Example 5-1

Preparation of a modified high-nickel ternary positive electrode material basically followed that of Example 1-1, except that in step S1, a sintering temperature was 650°C.

### Comparative Example 5-2

Preparation of a modified high-nickel ternary positive electrode material basically followed that of Example 1-1, except that in step S1, a sintering temperature was 1000°C.

### Example 6-1

Preparation of a modified high-nickel ternary positive electrode material basically followed that of Example 1-1, except that in step S2, a sintering temperature was 500°C.

### Example 6-2

Preparation of a modified high-nickel ternary positive electrode material basically followed that of Example 1-1, except that in step S2, a sintering temperature was 550°C.

### Example 6-3

Preparation of a modified high-nickel ternary positive electrode material basically followed that of Example 1-1, except that in step S2, a sintering temperature was 700°C.

### Example 6-4

Preparation of a modified high-nickel ternary positive electrode material basically followed that of Example 1-1, except that in step S2, a sintering temperature was 800°C.

### Comparative Example 6-1

Preparation of a modified high-nickel ternary positive electrode material basically followed that of Example 1-1, except that in step S2, a sintering temperature was 400°C.

### Comparative Example 6-2

Preparation of a modified high-nickel ternary positive electrode material basically followed that of Example 1-1, except that in step S2, a sintering temperature was 900°C.

### Test method

### 1. Tests for high-nickel ternary precursor doped with W and high-nickel ternary positive electrode material matrix doped with M1, M2, and W

The plasma-optical emission spectrometer (ICP-OES) with device model of ICAP7400 from Thermo Fisher Scientific Inc. in USA was used. 1 g sample was first weighted and placed in a beaker. Then 25 ml HNO₃ solution with a concentration of 25% by volume was added to the sample to dissolve the sample, and 475 ml deionized water was added for dilution. The diluted liquid was then put into the instrument for target element analysis, and an amount of a target element contained was calculated.

### 2. Co doping thickness

A glue for sample preparation (dispersing PVDF into N-methylpyrrolidone, with a proportion of PVDF being about 8%) and sample powder were mixed uniform (the powder is about 5 times the weight of the glue) and applied onto a copper foil, which was then dried at 60°C for 30 min. The prepared sample was cut into pieces with a size of 6 mm by 6 mm using a pair of scissors. A sample piece was fixed to a sample stage and put into an ion polisher (model: IB-19500CP). An edge of the sample piece was adjusted to be parallel to the center line, with a distance of 40-60 µm to the X axis and the Y axis, for cutting. After cutting, an X-Max energy spectrometer (EDS) of Oxford Instruments Group in the UK and a Sigma-02-33 model scanning electron microscope (SEM) of ZEISS in Germany were used together to select a suitable particle section on the cut sample. Linear scanning for an amount of element Co was performed in a diameter direction of a particle. A distance from a site at which a proportion of Co starts to increase as compared to the particle core to the particle center was measured as L1, and then a Co doping thickness is (particle radius R - L1) µm.

### 3. Amount of lithium impurities on surface

Acid-base titration method: 30 g sample was added into 100 ml pure water, stirred for 30 min and left standing for 5 min. Upon suction filtration, 10 ml supernatant was taken, and lithium carbonate and lithium hydroxide that were dissolved from a positive electrode material were titrated with 0.05 mol/L hydrochloric acid standard solution. By using a pH electrode as an indicator electrode, an end point was determined by a jump generated by a potential change, and an amount of lithium impurities in the positive electrode material was calculated.

### 4. Volume-based particle size

The volume-based particle size was tested by using a Malvern 2000 instrument in accordance with the GB/T 19077-2016/ISO 13320:2009 particle size distribution laser diffraction method. A clean beaker was taken, added with an appropriate amount of a sample under test until a shading degree was 8%-12%, and then added with 20 ml deionized water. A resulting mixture was subjected to external ultrasound for 5 min, and then a particle size tester was powered on to start testing.

### 5. Powder compacted density under a pressure of 5 tons

A compacted density test method included obtaining a thickness of a sample by compacting the sample with a pressure of 5 tons in a specific mold, and calculating a compacted density according to ρ_{c} = m/V = m/(S*H), where m is a weight of the material, S is a powder area, and H is a powder height.

### 6. Preparation of button cell

The ternary positive electrode materials prepared in the foregoing examples and comparative examples, PVDF, and conductive carbon were added at a weight ratio of 90:5:5 into N-methylpyrrolidone and stirred in a drying room to obtain a slurry. The slurry was applied onto an aluminum foil, followed by drying and cold pressing, to obtain a positive electrode plate. A lithium sheet was used as a negative electrode, 1 mol/L LiPF₆/(EC + DEC + DMC) (at a volume ratio of 1:1:1) was used as an electrolyte, and a button cell was assembled in a button cell box.

### Method for testing initial gram capacity of button cell

The foregoing prepared button cell was charged to 4.3 V at 0.1C under a voltage of 2.8 V-4.3 V, and then was charged at a constant voltage of 4.3 V to a current less than or equal to 0.05 mA. After the button cell was left standing for 2 min, a charging capacity at that point was recorded as C₀. Then, the button cell was discharged to 2.8 V at 0.1C, and a discharging capacity at that point was an initial gram capacity and recorded as D₀.

### 7. Preparation of full cell

The ternary positive electrode materials prepared in the foregoing examples and comparative examples were used as a positive electrode active substance. The positive electrode active substance, a conductive agent acetylene black, and a binder polyvinylidene difluoride (PVDF) at a weight ratio of 94:3:3 were fully stirred and uniformly mixed in an N-methylpyrrolidone solvent system, and then a resulting mixture was applied onto an aluminum foil, followed by drying and cold pressing, to obtain a positive electrode plate. A negative electrode active material artificial graphite, hard carbon, a conductive agent acetylene black, a binder styrene-butadiene rubber (SBR), and a thickener sodium carboxymethyl cellulose (CMC) at a weight ratio of 90:5:2:2:1 were fully stirred and uniformly mixed in a deionized water solvent system, and then a resulting mixture was applied onto a copper foil, followed by drying and cold pressing to obtain a negative electrode plate. A porous polyethylene polymeric film was used as a separator. The positive electrode plate, the separator, and the negative electrode plate were stacked in order, so that the separator was placed between the positive and negative electrodes for separation, and winding was performed to obtain a bare cell. The bare cell was placed in an outer package, the prepared base electrolyte, that is 1 mol/L LiPF₆/(EC + EMC + DMC) (at a volume ratio of 1:1:1), was injected, and then the outer package was sealed, to obtain a full cell.

### Method for testing initial gram capacity of full cell

The foregoing prepared full cell was left standing for 5 min at a constant temperature of 25°C, and was discharged to 2.8 V at 1/3C. After being left standing for 5 min, the full cell was charged to 4.25 V at 1/3C, and was charged at a constant voltage of 4.25 V to a current less than or equal to 0.05 mA. After the full cell was left standing for 5 min, a charging capacity at that point was recorded as C₀. Then, the full cell was discharged to 2.8 V at 1/3C, and a discharging capacity at that point was an initial gram capacity and recorded as D₀.

### Cycling performance test for full cell at 25°C/45°C

The prepared full cell was charged to 4.25 V at 1C under a voltage of 2.8-4.25 V at a constant temperature of 25°C or 45°C, and then was charged at a constant voltage of 4.25 V to a current less than or equal to 0.05 mA. After being left standing for 5 min, the full cell was discharged to 2.8 V at 1C, and a capacity was recorded as D₀. The foregoing operation was repeated, a capacity was recorded as Dₙ(n=0,1,2...), and a capacity retention rate after 300 cycles was calculated as: (D₃₀₀ - D₀)/D₀*100%.

### 8. Swelling test for full cell at 70°C

The full cell with 100% SOC (remaining capacity) was stored at 70°C. An OCV (open circuit voltage), IMP (impedance), volume (drainage method test) of the full cell were measured before, during, and after storage. A residual capacity and reversible capacity of the cell were tested at the end of storage. The full cell was baked every 48 h, and left standing for 1 h, followed by OCV and IMP test. After the full cell was cooled to room temperature, a volume of the full cell was tested by the drainage method. The test was finished after 30-day storage, or storage continues until the volume swelled more than 50%. A protection voltage range was 2.7-4.3 V, and a nominal capacity was 2.25 Ah.

The foregoing examples and comparative examples were tested respectively according to the foregoing processes, and specific values are shown in Table 1 to Table 6.

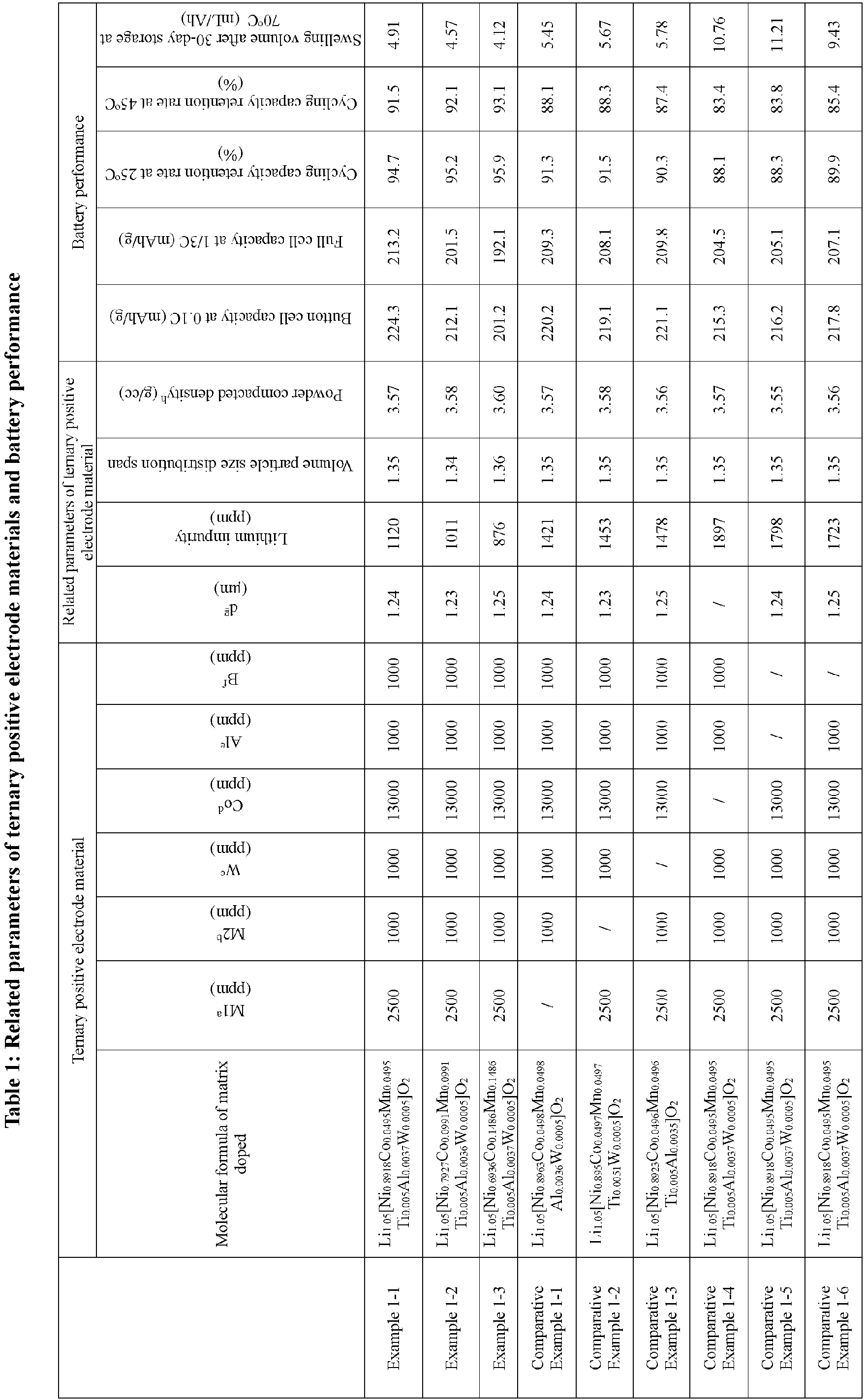

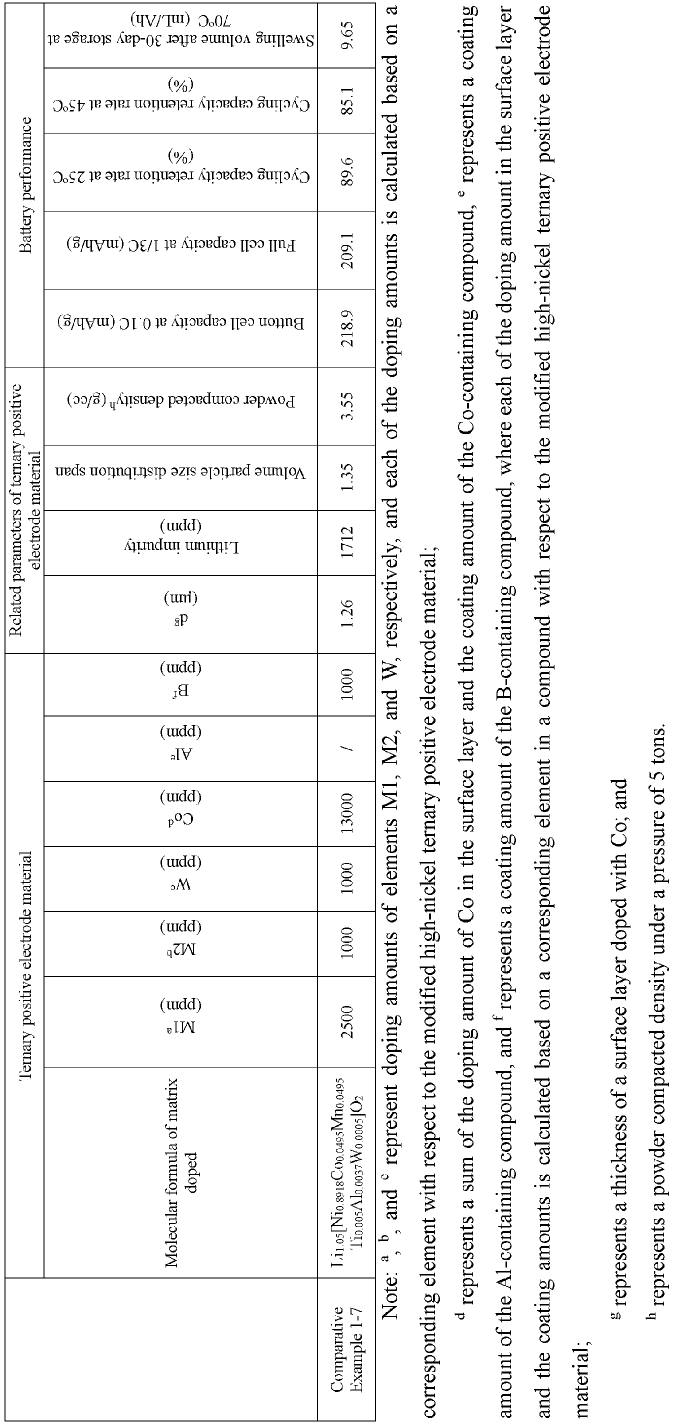

**Table 2: Impact of doping elements M1 and M2 on battery performance**

| | Doping element | | | Related parameters of ternary positive electrode material | | | | Battery performance | | | | |
|---|---|---|---|---|---|---|---|---|---|---|---|---|
| | M1 | M2 | W | Doping thickness of Co in surface layer (µm) | Lithium impurity (ppm) | Volume particle size distribution span | Powder compacted density under a pressure of 5 tons (g/cc) | Button cell capacity at 0.1C (mAh/g) | Full cell capacity at 1/3C (mAh/g) | Cycling capacity retention rate at 25°C(%) | Cycling capacity retention rate at 45°C (%) | Swelling volume after 30-day storage at 70°C (mL/Ah) |
| Example 1-1 | Ti | Al | W | 1.24 | 1120 | 1.35 | 3.57 | 224.3 | 213.2 | 94.7 | 91.5 | 4.91 |
| Example 2-1 | Zr | Sr | W | 1.24 | 1023 | 1.35 | 3.57 | 224.5 | 213.4 | 94.9 | 91.6 | 5.02 |
| Example 2-2 | Sb | Mg | W | 1.23 | 1002 | 1.36 | 3.59 | 224.1 | 213.1 | 94.8 | 91.8 | 4.87 |
| Example 2-3 | Ti | Zn | W | 1.25 | 993 | 1.35 | 3.58 | 224.3 | 213.3 | 94.7 | 91.6 | 4.98 |

**Table 3: Impact of doping amounts of elements M1, M2, and W on battery performance**

| Example | Amount of doping element | | | | Related parameters of ternary positive electrode material | | | | Battery performance | | | | |
|---|---|---|---|---|---|---|---|---|---|---|---|---|---|
| | M1 (ppm) | M2 (ppm) | W (ppm) | M1/ (M2+W) | Doping thickness of Co in surface layer (µm) | Lithium impurity (ppm) | Volume particle size distribution span | Powder compacted density under a pressure of 5 tons (g/cc) | Button cell capacity at 0.1C (mAh/g) | Full cell capacity at 1/3C (mAh/g) | Cycling capacity retention rate at 25°C (%) | Cycling capacity retention rate at 45°C (%) | Swelling volume after 30-day storage at 70°C (mL/Ah) |
| Example 1-1 | 2500 | 1000 | 1000 | 1:0.8 | 1.24 | 1120 | 1.35 | 3.57 | 224.3 | 213.2 | 94.7 | 91.5 | 4.91 |
| Example 3-1 | 2000 | 2000 | 2000 | 1:2 | 1.23 | 1132 | 1.36 | 3.56 | 222.4 | 211.2 | 94.5 | 91.2 | 4.92 |
| Example 3-2 | 2000 | 1500 | 1500 | 1:1.5 | 1.25 | 1005 | 1.35 | 3.57 | 224.5 | 214.3 | 94.9 | 91.8 | 4.78 |
| Example 3-3 | 2000 | 1900 | 100 | 1:1 | 1.26 | 996 | 1.36 | 3.56 | 224.8 | 214.5 | 95.2 | 92.1 | 4.67 |
| Example 3-4 | 3000 | 1000 | 500 | 1:0.5 | 1.24 | 1076 | 1.34 | 3.57 | 224.6 | 214.2 | 95.0 | 91.9 | 4.76 |
| Example 3-5 | 4000 | 500 | 1900 | 1:0.6 | 1.23 | 1201 | 1.35 | 3.58 | 222.6 | 211.6 | 94.6 | 91.3 | 5.01 |
| Example 3-6 | 6000 | 500 | 100 | 1:0.1 | 1.25 | 1321 | 1.36 | 3.56 | 218.4 | 207.5 | 93.2 | 90.1 | 5.89 |
| Example 3-7 | 4000 | 100 | 100 | 1:0.05 | 1.26 | 1423 | 1.34 | 3.55 | 224.5 | 210.1 | 92.9 | 89.8 | 5.98 |
| Example 3-8 | 2000 | 3000 | 3000 | 1:3 | 1.24 | 1323 | 1.35 | 3.56 | 215.2 | 202.3 | 92.5 | 89.5 | 6.21 |

**Table 4: Impact of doping amount in surface layer and coating amount on battery performance**

| Example | Doping amount in surface layer and coating amount | | | | | Related parameters of ternary positive electrode material | | | | Battery performance | | | | |
|---|---|---|---|---|---|---|---|---|---|---|---|---|---|---|
| | Co^{a} (ppm) | Al^{b} (ppm) | B^{c} (ppm) | Al:B | Sum of Co, Al, and B^{d} | d^{e} (µm) | Lithium impurity (ppm) | Volume particle size distribution span | Powder compacted density^{f} (g/cc) | Button cell capacity at 0.1C (mAh/g) | Full cell capacity at 1/3C (mAh/g) | Cycling capacity retention rate at 25°C (%) | Cycling capacity retention rate at 45°C (%) | Swelling volume after 30-day storage at 70°C (mL/Ah) |
| Example 1-1 | 13000 | 1000 | 1000 | 1:1 | 15000 | 1.24 | 1120 | 1.35 | 3.57 | 224.3 | 213.2 | 94.7 | 91.5 | 4.91 |
| Example 4-1 | 20000 | 1000 | 1000 | 1:1 | 22000 | 2.00 | 1001 | 1.34 | 3.58 | 223.1 | 212.1 | 94.4 | 91.1 | 4.87 |
| Example 4-2 | 5000 | 1000 | 1000 | 1:1 | 7000 | 0.98 | 1154 | 1.35 | 3.57 | 224.8 | 213.5 | 94.8 | 91.6 | 4.96 |
| Example 4-3 | 1000 | 1000 | 1000 | 1:1 | 3000 | 0.19 | 1239 | 1.36 | 3.59 | 223.8 | 212.9 | 94.5 | 91.3 | 5.34 |
| Example 4-4 | 100 | 1000 | 1000 | 1:1 | 2100 | 0.05 | 1432 | 1.35 | 3.58 | 221.5 | 211.3 | 94.1 | 90.9 | 5.87 |
| Example 4-5 | 25000 | 1000 | 1000 | 1:1 | 27000 | 3.2 | 1356 | 1.36 | 3.55 | 215.2 | 203.6 | 92.2 | 89.1 | 5.12 |
| Example 4-6 | 13000 | 3000 | 2000 | 1.5:1 | 18000 | 1.23 | 1023 | 1.36 | 3.56 | 223.5 | 212.4 | 94.5 | 91.3 | 4.67 |
| Example 4-7 | 13000 | 2000 | 1000 | 2:1 | 16000 | 1.25 | 1056 | 1.35 | 3.57 | 223.9 | 212.7 | 94.3 | 91.1 | 4.69 |
| Example 4-8 | 13000 | 500 | 500 | 1:1 | 14000 | 1.24 | 1189 | 1.36 | 3.58 | 224.5 | 213.4 | 94.5 | 91.2 | 5.09 |
| Example 4-9 | 13000 | 750 | 1500 | 0.5:1 | 15250 | 1.26 | 1103 | 1.35 | 3.57 | 224.1 | 213.0 | 94.3 | 91.1 | 4.95 |
| Example 4-10 | 13000 | 100 | 100 | 1:1 | 13200 | 1.23 | 1289 | 1.34 | 3.56 | 222.8 | 211.9 | 94.0 | 90.8 | 5.34 |
| Example 4-11 | 13000 | 3000 | 1000 | 3:1 | 17000 | 1.25 | 1156 | 1.35 | 3.58 | 220.1 | 208.3 | 92.5 | 89.1 | 5.65 |
| Example 4-12 | 800 | 100 | 100 | 1:1 | 1000 | 0.11 | 1456 | 1.36 | 3.55 | 222.4 | 211.7 | 93.4 | 90.4 | 5.89 |

| | | | | | | | | | | | | | | |
|---|---|---|---|---|---|---|---|---|---|---|---|---|---|---|
| Note: ^{a} represents a sum of the doping amount of Co in the surface layer and the coating amount of the Co-containing compound, ^{b} and ^{c} represent a coating amount of the Al-containing compound and a coating amount of the B-containing compound respectively, and ^{d} represents a sum of the doping amount of Co in the surface layer and coating amounts of the Co-containing compound, the Al-containing compound, and the B-containing compound, where each of the doping amount in the surface layer and the coating amounts is calculated based on a corresponding element in a compound with respect to the modified high-nickel ternary positive electrode material; ^{e} represents a doping thickness of Co in a surface layer; and ^{f} represents a powder compacted density under a pressure of 5 tons. | | | | | | | | | | | | | | |

**Table 5: Impact of sintering temperature in step S1 on battery performance**

| Example | Sintering temperature in step S1 (°C) | Related parameters of ternary positive electrode material | | | | Battery performance | | | | |
|---|---|---|---|---|---|---|---|---|---|---|
| | | Doping thickness of Co in surface layer (µm) | Lithium impurity (ppm) | Volume particle size distribution span | Powder compacted density under a pressure of 5 tons (g/cc) | Button cell capacity at 0.1C (mAh/g) | Full cell capacity at 1/3C (mAh/g) | Cycling capacity retention rate at 25°C (%) | Cycling capacity retention rate at 45°C (%) | Swelling volume after 30-day storage at 70°C (mL/Ah) |
| Example 1-1 | 750 | 1.24 | 1120 | 1.35 | 3.57 | 224.3 | 213.2 | 94.7 | 91.5 | 4.91 |
| Example 5-1 | 700 | 1.25 | 1167 | 1.36 | 3.56 | 224.8 | 213.6 | 94.5 | 91.3 | 4.89 |
| Example 5-2 | 950 | 1.23 | 1021 | 1.33 | 3.59 | 222.9 | 211.3 | 94.2 | 90.9 | 4.72 |
| Comparative Example 5-1 | 650 | 1.25 | 2356 | 1.35 | 3.51 | 210.2 | 198.1 | 88.4 | 83.0 | 47.45 |
| Comparative Example 5-2 | 1000 | 1.26 | 901 | 1.21 | 3.62 | 200.1 | 189.2 | 83.1 | 78.4 | 11.21 |

**Table 6: Impact of sintering temperature in step S2 on battery performance**

| Example | Sintering temperature in step S2 (°C) | Related parameters of ternary positive electrode material | | | | Battery performance | | | | |
|---|---|---|---|---|---|---|---|---|---|---|
| | | Doping thickness of Co in surface layer (µm) | Lithium impurity (ppm) | Volume particle size distribution span | Powder compacted density under a pressure of 5 tons (g/cc) | Button cell capacity at 0.1C (mAh/g) | Full cell capacity at 1/3C (mAh/g) | Cycling capacity retention rate at 25°C (%) | Cycling capacity retention rate at 45°C (%) | Swelling volume after 30-day storage at 70°C (mL/Ah) |
| Example 1-1 | 600 | 1.24 | 1120 | 1.35 | 3.57 | 224.3 | 213.2 | 94.7 | 91.5 | 4.91 |
| Example 6-1 | 500 | 0.78 | 1243 | 1.34 | 3.56 | 224.2 | 213.0 | 94.5 | 91.3 | 5.09 |
| Example 6-2 | 550 | 1.05 | 1167 | 1.35 | 3.57 | 224.7 | 213.8 | 94.7 | 91.4 | 4.89 |
| Example 6-3 | 700 | 1.57 | 1015 | 1.36 | 2.58 | 223.9 | 212.8 | 94.3 | 91.2 | 5.21 |
| Example 6-4 | 800 | 1.87 | 989 | 1.35 | 3.59 | 223.4 | 212.5 | 94.1 | 90.9 | 5.13 |
| Comparative Example 6-1 | 400 | 0 | 2543 | 1.35 | 3.52 | 213.1 | 200.9 | 91.0 | 85.9 | 10.54 |
| Comparative Example 6-2 | 900 | 3.89 | 890 | 1.34 | 3.61 | 214.5 | 201.8 | 91.6 | 86.3 | 8.49 |

It can be learned from Table 1 that the cycling capacity retention rates of the full cells at 25°C and 45°C corresponding to all examples are significantly higher than those in the comparative examples, and the swelling rates after 30-day storage at 70°C in all examples are lower than those in all comparative examples. In addition, in a case of a same ternary positive electrode material matrix, the button cell capacities at 0.1C and the full cell capacities at 1/3C in examples are also significantly better than those in all comparative examples.

In comprehensive comparison of Example 1-1 to Example 1-3, when the high-nickel ternary positive electrode material matrix is doped with elements M1, M2, and W, further doped with Co in its surface layer, and also coated with an inner coating layer having a Co-containing compound and an outer coating layer having an Al-containing compound and a B-containing compound, the cycling capacity retention rates of corresponding full cells at 25°C are all higher than 94.7%, the cycling capacity retention rates at 45°C are all higher than 91.5%, while the swelling rates after 30-day storage at 70°C are all lower than 4.91 mL/Ah.

In comprehensive comparison of Example 1-1, and Example 2-1 to Example 2-3, when M1 is one of Mo, Zr, Ti, Sb, Nb, and Te, and M2 is one of Mg, Al, Ca, Zn, and Sr, the corresponding button cell capacities at 0.1C, full cell capacities at 1/3C, cycling capacity retention rates at 25°C and 45°C, and swelling rates after 30-day storage at 70°C are all good.

In comprehensive comparison of Example 1-1, and Example 3-1 to Example 3-8, when the doping amount of W is 100-2000 ppm, the doping amount of M1 is 2000-4000 ppm, the doping amount of M2 is 500-2000 ppm, and a ratio of the doping amount of M1 to a sum of the doping amounts of M2 and W is 1:(0.1-2), the corresponding button cell capacities at 0.1C are all higher than 222.4 mAh/g, the full cell capacities at 1/3C are all higher than 211.2 mAh/g, the cycling retention rates at 25°C are all higher than 94.5%, the cycling retention rates at 45°C are all higher than 91.2%, while the swelling rates after 30-day storage at 70°C are all lower than 5.01 mL/Ah. Further, when the ratio of the doping amount of M1 to a sum of the doping amounts of M2 and W is 1:(0.5-1.5), the corresponding button cell capacities at 0.1C, full cell capacities at 1/3C, cycling retention rates at 25°C and 45°C, and swelling rates after 30-day storage at 70°C are further improved.

In comprehensive comparison of Example 1-1, and Example 4-1 to Example 4-12, when a sum of a doping amount of Co in the surface layer and a coating amount of the Co-containing compound is 100-20000 ppm, a coating amount of the Al-containing compound is 100-3000 ppm, and a coating amount of the B-containing compound is 100-2000 ppm, in a case that the coating amount of the Al-containing compound and the coating amount of the B-containing compound satisfy that a weight ratio of Al to B is (0.5-2):1 and that a sum of the doping amount of Co in the surface layer and the coating amounts of the Co-containing compound, the Al-containing compound, and the B-containing compound is 1000-22000 ppm, the corresponding button cell capacities at 0.1C, full cell capacities at 1/3C, cycling retention rates at 25°C and 45°C, and swelling rates after 30-day storage at 70°C are all good. Further, when the sum of the doping amount of Co in the surface layer and the coating amounts of the Co-containing compound, the Al-containing compound, and the B-containing compound is 1000-15000 ppm, the corresponding button cell capacities at 0.1C, full cell capacities at 1/3C, cycling retention rates at 25°C and 45°C are further improved.

It can be learned from Table 5 that, when the sintering temperature in step S1 is 700-950°C, the corresponding button cell capacities at 0.1C, full cell capacities at 1/3C, cycling retention rates at 25°C and 45°C, and swelling rates after 30-day storage at 70°C of the prepared ternary positive electrode material are good. However, a too-high or too-low initial sintering temperature may obviously impact the capacity, cycling, and storage swelling performance of the prepared ternary positive electrode material.

It can be learned from Table 6 that, when the sintering temperature in step S2 is 500-800°C, the corresponding button cell capacities at 0.1C, full cell capacities at 1/3C, cycling retention rates at 25°C and 45°C, and swelling rates after 30-day storage at 70°C of the prepared ternary positive electrode material are good; when the temperature in step S2 is too high, Co is almost completely doped into the particles, causing a great change in the composition of the whole particles and reducing the amount of nickel contained in the whole material particles, thereby significantly reducing the capacity of the material. In addition, a small amount of the Co-containing compound applied on the surface may affect the cycling and storage performance of the battery. When the temperature in step S2 is too low, the Co-containing compound is almost completely applied on the surfaces of the particles, and does not react well with the lithium impurities on the surfaces of the particles, causing a relatively large amount of lithium impurities as well as no reaction between the Co-containing compound and the lithium impurities. As a result, the Co-containing compound is inactive, the whole material is relatively low in capacity, and cycling and storage performance of the battery are affected.

It should be noted that this application is not limited to the foregoing embodiments. The foregoing embodiments are merely examples, and embodiments having substantially the same constructions and having the same effects as the technical idea within the scope of the technical solutions of this application are all included in the technical scope of this application. In addition, without departing from the essence of this application, various modifications made to the embodiments that can be conceived by those skilled in the art, and other manners constructed by combining some of the constituent elements in the embodiments are also included in the scope of this application.

Some further aspects of the invention can be found in the following paragraphs:
1. A modified high-nickel ternary positive electrode material, characterized by comprising an inner core, an inner coating layer, and an outer coating layer, wherein
   the inner core comprises a high-nickel ternary positive electrode material matrix, the matrix being doped with M1, M2, and W, wherein M1 is one of Mo, Zr, Ti, Sb, Nb, and Te, M2 is one of Mg, Al, Ca, Zn, and Sr, and a chemical formula of the high-nickel ternary positive electrode material matrix doped with M1, M2, and W is Li₁₊ₐ[NiₓCo_{y}Mn_{z}M1_{b}M2_{c}W_{d}]O₂, wherein 0.65 ≤ x < 1, 0 ≤ y < 0.3, 0 ≤ z < 0.3, 0 < a < 0.2, 0 < b < 0.1, 0 < c < 0.1, 0 < d < 0.1, x + y + z + b + c + d = 1, and optionally, 0.8 ≤ x < 1;
   a surface layer of the inner core is also doped with Co; and
   the inner coating layer is a Co-containing compound, and the outer coating layer comprises an Al-containing compound and a B-containing compound.
2. The modified high-nickel ternary positive electrode material according to paragraph 1, characterized in that a doping amount of M1 is ≥ a doping amount of M2 or W.
3. The modified high-nickel ternary positive electrode material according to paragraph 1 or 2, characterized in that a ratio of the doping amount of M1 to a sum of doping amounts of M2 and W is 1:(0.1-2), optionally 1:(0.5-1.5).
4. The modified high-nickel ternary positive electrode material according to any one of paragraphs 1 to 3, characterized in that a thickness d of the surface layer satisfies 0 < d < 3 µm, optionally 0 < d < 2 µm.
5. The modified high-nickel ternary positive electrode material according to any one of paragraphs 1 to 4, characterized in that a sum of a doping amount of Co in the surface layer and a coating amount of the Co-containing compound is 100-20000 ppm, optionally 1000-13000 ppm; a coating amount of the Al-containing compound is 100-3000 ppm, optionally 500-2000 ppm; and a coating amount of the B-containing compound is 100-2000 ppm, optionally 500-1500 ppm, wherein each of the doping amount in the surface layer and the coating amounts is calculated based on a corresponding element in a compound with respect to the modified high-nickel ternary positive electrode material.
6. The modified high-nickel ternary positive electrode material according to any one of paragraphs 1 to 5, characterized in that a total thickness of the inner and outer coating layers is 0.001-1 µm.
7. The modified high-nickel ternary positive electrode material according to any one of paragraphs 1 to 6, characterized in that the coating amount of the Al-containing compound and the coating amount of the B-containing compound satisfy that a weight ratio of Al to B is (0.5-2):1, wherein each of the coating amounts is calculated based on a corresponding element in a compound with respect to the modified high-nickel ternary positive electrode material.
8. The modified high-nickel ternary positive electrode material according to any one of paragraphs 1 to 7, characterized in that a doping amount of W is 100-2000 ppm, optionally 100-1500 ppm; the doping amount of M1 is 2000-4000 ppm; and the doping amount of M2 is 500-2000 ppm, wherein each of the doping amounts is calculated based on a corresponding element with respect to the modified high-nickel ternary positive electrode material.
9. The modified high-nickel ternary positive electrode material according to any one of paragraphs 1 to 8, characterized in that a sum of the doping amount of Co in the surface layer and coating amounts of the Co-containing compound, the Al-containing compound, and the B-containing compound is 1000-22000 ppm, optionally 1000-15000 ppm, wherein each of the doping amount in the surface layer and the coating amounts is calculated based on a corresponding element in a compound with respect to the modified high-nickel ternary positive electrode material.
10. The modified high-nickel ternary positive electrode material according to any one of paragraphs 1 to 9, characterized in that a volume particle size distribution span of the modified high-nickel ternary positive electrode material satisfies (Dᵥ90 - Dᵥ10)/Dᵥ50 ≥ 1.1, optionally (Dᵥ90 - Dᵥ10)/Dᵥ50 ≥ 1.2.
11. The modified high-nickel ternary positive electrode material according to any one of paragraphs 1 to 10, characterized in that a powder compacted density of the modified high-nickel ternary positive electrode material under a pressure of 5 tons is ≥ 3.4 g/cc, optionally ≥ 3.5 g/cc.
12. A method for preparing a modified high-nickel ternary positive electrode material, characterized by comprising:
   step S1: mixing and sintering a lithium salt, a high-nickel ternary precursor doped with W, an M1-containing compound, and an M2-containing compound, to obtain a high-nickel ternary positive electrode material matrix doped with M1, M2, and W, wherein a chemical formula of the high-nickel ternary precursor doped with W is (Ni_{X}Co_{Y}Mn_{Z}W_{D})(OH)₂, wherein 0.65 ≤ X < 1, 0 ≤ Y < 0.3, 0 ≤ Z < 0.3, 0 < D < 0.1, M1 is one of Mo, Zr, Ti, Sb, Nb, and Te, M2 is one of Mg, Al, Ca, Zn, and Sr, and a chemical formula of the high-nickel ternary positive electrode material matrix doped with M1, M2, and W is Li₁₊ₐ[NiₓCo_{y}Mn_{z}M1_{b}M2_{c}W_{d}]O₂, wherein 0.65 ≤ x < 1, 0 ≤ y < 0.3, 0 ≤ z < 0.3, 0 < a < 0.2, 0 < b < 0.1, 0 < c < 0.1, 0 < d < 0.1, x + y + z + b + c + d = 1, and optionally, 0.8 ≤ x < 1;
   step S2: mixing and sintering a Co-containing compound and the high-nickel ternary positive electrode material matrix doped with M1, M2, and W, to obtain a high-nickel ternary positive electrode material doped with Co in a surface layer and coated with a Co-containing compound on a surface; and
   step S3: mixing and sintering an Al-containing compound, a B-containing compound, and the high-nickel ternary positive electrode material doped with Co in the surface layer and coated with a Co-containing compound on the surface, to obtain a modified high-nickel ternary positive electrode material.
13. The method according to paragraph 12, characterized in that in step S1, a sintering temperature is 700-950°C, a sintering duration is 10-20 h, and a sintering atmosphere is air or O₂.
14. The method according to paragraph 12 or 13, characterized in that a particle size of the Co-containing compound is 0.001-10 µm, optionally 0.001-1 µm.
15. The method according to any one of paragraphs 12 to 14, characterized in that in step S2, a sintering temperature is 500-800°C, optionally 550-750°C; a sintering duration is 5-15 h, optionally 5-10 h; and a sintering atmosphere is air or O₂.
16. The method according to any one of paragraphs 12 to 15, characterized in that in step S3, a sintering temperature is 200-500°C, optionally 200-400°C; a sintering duration is 5-15 h, optionally 5-10 h; and a sintering atmosphere is air or O₂.
17. A secondary battery, comprising the modified high-nickel ternary positive electrode material according to any one of paragraphs 1 to 11 or the modified high-nickel ternary positive electrode material prepared by using the method according to any one of paragraphs 12 to 16.
18. A battery module, comprising the secondary battery according to paragraph 17.
19. A battery pack, comprising the battery module according to paragraph 18.
20. An electric apparatus, comprising at least one of the secondary battery according to paragraph 17, the battery module according to paragraph 18, and the battery pack according to paragraph 19.

## Claims

1. A method for preparing a modified high-nickel ternary positive electrode material, **characterized by** comprising:
step S1: mixing and sintering a lithium salt, a high-nickel ternary precursor doped with W, an M1-containing compound, and an M2-containing compound, to obtain a high-nickel ternary positive electrode material matrix doped with M1, M2, and optionally W, wherein a chemical formula of the high-nickel ternary precursor optionally doped with W is (Ni_{X}Co_{Y}Mn_{Z}W_{D})(OH)₂, wherein 0.65 ≤ X < 1, 0 ≤ Y < 0.3, 0 ≤ Z < 0.3, 0 < D < 0.1, M1 is one of Mo, Zr, Ti, Sb, Nb, and Te, M2 is one of Mg, Al, Ca, Zn, and Sr, and a chemical formula of the high-nickel ternary positive electrode material matrix doped with M1, M2, and optionally W is Li₁₊ₐ[NiₓCo_{y}Mn_{z}M1_{b}M2_{c}W_{d}]O₂, wherein 0.65 ≤ x < 1,0 ≤ y < 0.3, 0 ≤ z < 0.3, 0 < a < 0.2, 0 < b < 0.1, 0 < c < 0.1, 0 ≤ d < 0.1, x + y + z + b + c + d = 1, and optionally, 0.8 ≤ x < 1;
step S2: mixing and sintering a Co-containing compound and the high-nickel ternary positive electrode material matrix doped with M1, M2, and optionally W to obtain a high-nickel ternary positive electrode material doped with Co ; and
step S3: mixing and sintering an Al-containing compound, a B-containing compound, and the high-nickel ternary positive electrode material doped with Co to obtain a modified high-nickel ternary positive electrode material.

2. The method according to claim 1, **characterized in that** the high-nickel ternary precursor is doped with W, in addition to an M1-containing compound, and an M2-containing compound.

3. The method according to claim 1 or claim 2, **characterized in that** the high-nickel ternary positive electrode material is doped with Co in a surface layer and coated with a Co containing compound on a surface.

4. The method according to claim 2 or claim 3, **characterized in that** in step S1, a sintering temperature is 700-950°C, a sintering duration is 10-20 h, and a sintering atmosphere is air or O₂.

5. The method according to claim 4, **characterized in that** a particle size of the Co-containing compound is 0.001-10 µm, optionally 0.001-1 µm.

6. The method according to any one of claims 2 to 5, **characterized in that** in step S2, a sintering temperature is 500-800°C, optionally 550-750°C; a sintering duration is 5-15 h, optionally 5-10 h; and a sintering atmosphere is air or O₂.

7. The method according to any one of claims 2 to 6, **characterized in that** in step S3, a sintering temperature is 200-500°C, optionally 200-400°C; a sintering duration is 5-15 h, optionally 5-10 h; and a sintering atmosphere is air or O₂.

8. A modified high-nickel ternary positive electrode material made by the method of any of claims 1 to 7.

9. A secondary battery, comprising a modified high-nickel ternary positive electrode material made according to any one of claims 1 to 7.

10. A battery module, comprising the secondary battery according to claim 9.

11. A battery pack, comprising the battery module according to claim 10.

12. An electric apparatus, comprising at least one of the secondary battery according to claim 9, the battery module according to claim 10, and the battery pack according to claim 11.
